# EUROPEAN PATENT APPLICATION

(11) **EP 4 604 220 A1**
(43) Date of publication of application: **20.08.2025**
(21) Application number: 23876954.1
(22) Date of filing: 22.06.2023
(51) Int. Cl.: H01M 4/66, H01M 10/052, H01M 10/0583, H01M 10/0585, H01M 10/0587, H01M 50/534, H01M 50/566

(54) **LITHIUM SECONDARY BATTERY**

(30) Priority: 13.10.2022 WO PCT/JP2022/038233
(71) Applicant: TERAWATT TECHNOLOGY K.K., Yokohama-shi, Kanagawa 226-0026 (JP)
(72) Inventor: OYAMA, Gosuke, Yokohama-shi, Kanagawa 226-0026 (JP); MIYAKE, Minoru, Yokohama-shi, Kanagawa 226-0026 (JP); OGATA, Ken, Yokohama-shi, Kanagawa 226-0026 (JP); FUJIKI, Satoshi, Yokohama-shi, Kanagawa 226-0026 (JP)
(74) Representative: Mewburn Ellis LLP
(86) International application number: PCT/JP2023/023134
(87) International publication number: WO 2024/079945

(57) **Abstract**

There is provided a technique for improving output characteristics of a lithium secondary battery while reducing the weight of the lithium secondary battery. The lithium secondary battery includes (a) a first laminate including a first electrode including a first current collector composed of a first insulating layer sandwiched by a pair of first conductive layers, wherein the first current collector has a first end part; (b) an intermediate laminate including an electrode having a polarity different from a polarity of the first electrode and a separator; (c) a second laminate that is configured to be disposed to be spaced apart from the first laminate in the lamination direction by interposing the intermediate laminate, wherein the second laminate includes a second electrode including a second current collector composed of a second insulating layer sandwiched by a pair of second conductive layers and having the same polarity as the polarity of the first electrode, and the second current collector has a second end part; and (d) an electrode tab that is configured to constitute a joining region with at least the first end part and the second end part and is electrically connected to the first laminate and the second laminate, wherein the first insulating layer and the second insulating layer include a resin having a glass transition temperature of 60°C or lower.

## Description

### Technical Field

An exemplary embodiment according to the present disclosure relates to a lithium secondary battery.

### Background Art

Patent Literature 1 discloses that the safety of a battery cell is improved by using a current collector in which a metal layer is formed on both surfaces of a resin film. In the resin film, the front and back of the film are separated by a resin layer having insulating properties, and thus electrical conduction cannot be obtained. Therefore, in a case of connecting an electrode tab for leading out a wiring line and an electrode film, conduction cannot be obtained between the front and back sides of the electrode and between a plurality of the electrodes and its corresponding electrode tab. In this regard, Patent Literature 2 discloses that a plurality of current collectors is folded and then laminated on each metal layer in order to connect each metal layer separated by a resin layer to an electrode tab for leading out a wiring line. In addition, Patent Literature 3 discloses that a safety level is increased by introducing an internal fuse part into a lithium battery including a tab.

### Citation List

### Patent Literatures

Patent Literature 1: Japanese Patent Application Laid-Open No. H11-102711
Patent Literature 2: Japanese Patent Application Laid-Open No. 2013-016321
Patent Literature 3: PCT Japanese Translation Patent Publication No. 2022-527140

### Summary of Invention

### Technical Problem

The present disclosure provides a technique for improving the output characteristics of a lithium secondary battery while reducing the weight of the lithium secondary battery.

### Solution to Problem

In one exemplary embodiment of the present disclosure, there is provided a lithium secondary battery including:
(a) a first laminate including a first electrode including a first current collector composed of a first insulating layer sandwiched by a pair of first conductive layers, wherein the first current collector has a first end part;
(b) an intermediate laminate including an electrode having a polarity different from a polarity of the first electrode and a separator;
(c) a second laminate that is configured to be disposed to be spaced apart from the first laminate in the lamination direction by interposing the intermediate laminate, wherein the second laminate includes a second electrode including a second current collector composed of a second insulating layer sandwiched by a pair of second conductive layers and having the same polarity as the polarity of the first electrode, and the second current collector has a second end part; and
(d) an electrode tab that is configured to constitute a joining region with the first end part and the second end part and is electrically connected to the first laminate and the second laminate,
wherein the first insulating layer and the second insulating layer include a resin having a glass transition temperature of 60°C or lower.

### Advantageous Effect of Invention

According to one exemplary embodiment according to the present disclosure, it is possible to provide a technique for improving the output characteristics of a lithium secondary battery while reducing the weight of the lithium secondary battery.

### Brief Description of Drawings

[Figure 1] Figure 1 is an exploded perspective view for describing a configuration example of a secondary battery 1.
[Figure 2] Figure 2 is a perspective view illustrating an example of a positive electrode 10.
[Figure 3] Figure 3 is a perspective view illustrating an example of a negative electrode laminate 30 and a metal sheet MS.
[Figure 4] Figure 4 is a view for describing a joining state of the electrode tab 40 for the negative electrode, an end part P, and a metal sheet MS.
[Figure 5] Figure 5 is a view for describing a first joining trace.
[Figure 6A] Figure 6A is a view for describing a step ST2 in an example manufacturing method for the secondary battery 1.
[Figure 6B] Figure 6B is a view for describing the step ST2 in the example manufacturing method for the secondary battery 1.
[Figure 6C] Figure 6C is a view for describing the step ST2 in the example manufacturing method for the secondary battery 1.
[Figure 6D] Figure 6D is a view for describing the step ST2 in the example manufacturing method for the secondary battery 1.
[Figure 7] Figure 7 is a view for describing a step ST3 in an example manufacturing method for the secondary battery 1.
[Figure 8] Figure 8 is a perspective view illustrating another example of the positive electrode 10.
[Figure 9] Figure 9 is a perspective view illustrating still another example of the positive electrode 10.
[Figure 10] Figure 10 is a perspective view illustrating another example of the negative electrode laminate 30 and the metal sheet MS.
[Figure 11] Figure 11 is a partial cross-sectional view illustrating another configuration example of the secondary battery 1.
[Figure 12] Figure 12 is a partial cross-sectional view illustrating still another configuration example of the secondary battery 1.
[Figure 13] Figure 13 is a perspective view for describing another configuration example of the negative electrode laminate.
[Figure 14] Figure 14 is a perspective view for describing still another configuration example of the negative electrode laminate.

### Description of Embodiments

Hereinafter, each embodiment according to the present disclosure will be described.

In one exemplary embodiment, there is provided a lithium secondary battery including:
(a) a first laminate including a first electrode including a first current collector composed of a first insulating layer sandwiched by a pair of first conductive layers, wherein the first current collector has a first end part;
(b) an intermediate laminate including an electrode having a polarity different from a polarity of the first electrode and a separator;
(c) a second laminate that is configured to be disposed to be spaced apart from the first laminate in the lamination direction by interposing the intermediate laminate, wherein the second laminate includes a second electrode including a second current collector composed of a second insulating layer sandwiched by a pair of second conductive layers and having the same polarity as the polarity of the first electrode, and the second current collector has a second end part; and
(d) an electrode tab that is configured to constitute a joining region with at least the first end part and the second end part and is electrically connected to the first laminate and the second laminate,
wherein the first insulating layer and the second insulating layer include a resin having a glass transition temperature of 60°C or lower.

In one exemplary embodiment, the melting point of the resin is 200°C or lower.

In one exemplary embodiment, the resin is polypropylene.

In one exemplary embodiment, the thickness of the first insulating layer and the thickness of the second insulating layer are 6.0 µm or less.

In one exemplary embodiment, the lithium secondary battery further includes (e) a metal sheet that is configured to be disposed between the first end part and the second end part, and the joining region is composed of the electrode tab, the first end part, the metal sheet, and the second end part.

In one exemplary embodiment, the thickness of the metal sheet is 3.0 µm or more and 15 µm or less.

In one exemplary embodiment, the metal sheet is made of the same material as the first conductive layer or the second conductive layer.

In one exemplary embodiment, a plurality of the first laminates and a plurality of the second laminates are configured to be alternately disposed in the lamination direction by sandwiching the intermediate laminate.

In one exemplary embodiment, a plurality of the first laminates and a plurality of the second laminates are configured to be alternately disposed in the lamination direction by sandwiching the intermediate laminate, and the metal sheet is configured to be disposed at least at one gap between a plurality of the first end parts and a plurality of the second end parts.

In one exemplary embodiment, the first laminate is in the form of a plate-shaped sheet, and the second laminate is in the form of a plate-shaped sheet which is separate from the first laminate.

In one exemplary embodiment, the first laminate and the second laminate are each configured to be formed by folding or winding a single sheet.

In one exemplary embodiment, a total of 10 or more layers of the first laminates and the second laminates are disposed.

In one exemplary embodiment, the first electrode and the second electrode are negative electrodes, and an electrode having a polarity different from a polarity of the first electrode is a positive electrode.

In one exemplary embodiment, the electrode tab is made of copper that is plated with nickel.

In one exemplary embodiment, the first electrode and the second electrode are positive electrodes, and the electrode having a polarity different from a polarity of the first electrode is a negative electrode.

Hereinafter, each embodiment according to the present disclosure will be described in detail with reference to the drawings. **It** is noted that in each drawing, the same or similar elements will be given the same reference numerals, and repeated descriptions will be omitted. Unless otherwise specified, a positional relationship such as up, down, left, and right will be described based on the positional relationship illustrated in the drawings. The dimensional ratio in the drawings does not indicate an actual ratio, and the actual ratio is not limited to the ratio illustrated in the drawings.

As described above, Patent Literature 2 proposes that a plurality of current collectors is folded and then laminated on each metal layer in order to connect each metal layer separated by a resin layer to an electrode tab for leading out a wiring line. However, this method requires a new device mechanism that folds the end part of the current collector for each metal layer during lamination. In addition, it is necessary to fold the end part of the current collector in conjunction with the lamination, and thus the productivity is significantly deteriorated.

In addition, in this method, even in a case where the electrode tab, the current collector, and each metal layer can be mechanically joined, the resistance of the joining portion is increased, and the output characteristics are deteriorated. Such a problem can be solved in a lithium secondary battery 1 (hereinafter, also referred to as a "secondary battery 1") according to one embodiment.

### <First embodiment>

### [Configuration example of secondary battery]

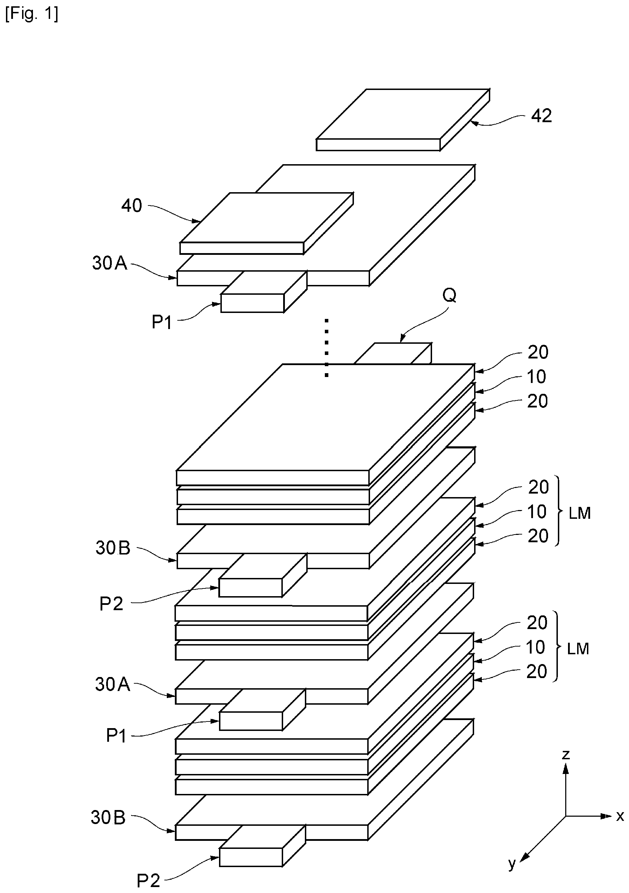

Figure 1 is an exploded perspective view for describing a configuration example of a secondary battery 1. As illustrated in Figure 1, the secondary battery 1 is constituted to include a positive electrode 10, a separator 20, a first negative electrode laminate 30A, a second negative electrode laminate 30B, an electrode tab 40 for the negative electrode, an electrode tab 42 for the positive electrode, and the like. Hereinafter, each configuration will be described in detail.

### (Positive electrode 10)

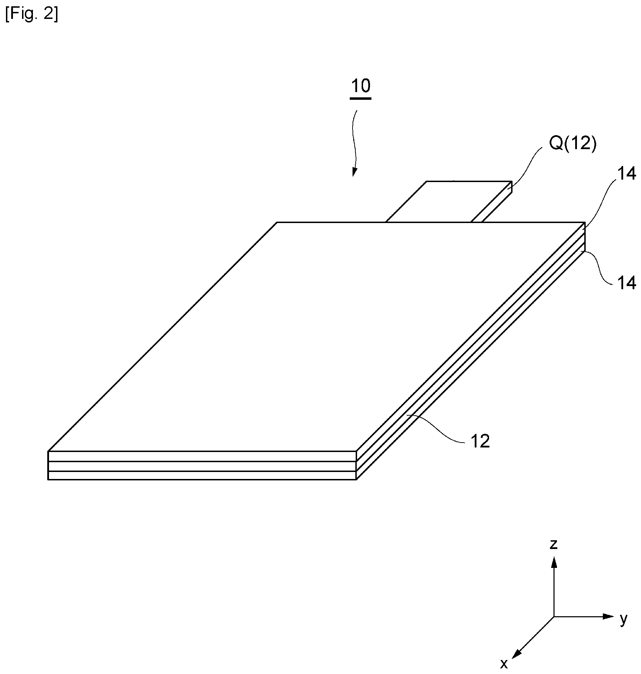

Figure 2 is a perspective view illustrating an example of a positive electrode 10. In one embodiment, the positive electrode 10 is constituted to include a positive electrode current collector 12 and a positive electrode active material layer 14 disposed on the positive electrode current collector 12.

In one embodiment, as illustrated in Figure 2, the positive electrode active material layer 14 is disposed on both surfaces of the positive electrode current collector 12. In one embodiment, the positive electrode active material layer 14 may be disposed only on one surface of the positive electrode current collector 12.

The positive electrode current collector 12 is in physical and/or electrical contact with the positive electrode active material layer 14 and functions to transfer electrons to and from the positive electrode active material layer 14. The positive electrode current collector 12 is composed of a conductor that does not react with lithium ions in the battery. In one embodiment, the positive electrode current collector 12 is formed from at least one kind of material selected from the group consisting of aluminum, titanium, stainless steel, nickel, and an alloy thereof. In one example, the positive electrode current collector 12 is aluminum or an aluminum alloy. In one embodiment, the thickness of the positive electrode current collector 12 may be 4.0 µm or more and 20.0 µm or less, 6.0 µm or more and 17.5 µm or less, or 8.0 µm or more and 15.0 µm or less.

The positive electrode active material layer 14 is formed on both surfaces of the positive electrode current collector 12. The positive electrode active material layer 14 may be constituted by appropriately selecting a publicly known material depending on the use application. The thickness of the positive electrode active material layer 14 may be appropriately adjusted according to the desired capacity and rate characteristics of the battery. In one embodiment, the thickness of each of the positive electrode active material layers 14 is, for example, 20 µm or more and 150 µm or less.

In one embodiment, the positive electrode active material layer 14 has a positive electrode active material. The positive electrode active material is a substance for holding a lithium element in the positive electrode active material layer 14, and can also be referred to as a host material of the lithium element (for example, lithium ion). In the positive electrode active material, the positive electrode active material is filled with lithium ions, and lithium ions are desorbed from the positive electrode active material by charging and discharging of the battery.

In one embodiment, the positive electrode active material is a metal oxide or a metal phosphate. The metal oxide may be, for example, a cobalt oxide-based compound, a manganese oxide-based compound, or a nickel oxide-based compound. The metal phosphate may be, for example, an iron phosphate-based compound or a cobalt phosphate-based compound. In one embodiment, the positive electrode active material may be at least one selected from the group consisting of LiCoO₂, LiNiₓCoyMn_{z}O (x + y + z = 1), LiNiₓCo_{y}Al_{z}O (x + y + z = 1), LiNiₓMn_{y}O (x + y = 1), LiNiO₂, LiMn₂O₄, LiFePO₄, LiCoPO₄, LiFeOF, LiNiOF, and LiTiS₂. The positive electrode active material may be used alone or in a combination of two or more kinds thereof. In one embodiment, the content of the positive electrode active material in the positive electrode active material layer 14 may be 50% by mass or more and 100% by mass or less with respect to the entire positive electrode active material layer 14.

In one embodiment, the positive electrode active material layer 14 may contain one or more components other than the positive electrode active material.

In one embodiment, the positive electrode active material layer 14 may contain a positive-electrode sacrificial agent. The positive-electrode sacrificial agent is a lithium-containing compound which causes an oxidation reaction and substantially does not cause a reduction reaction in a charge/discharge potential range of the positive electrode active material.

In one embodiment, the positive electrode active material layer 14 may contain a polymer electrolyte. In one example, the polymer electrolyte is a solid polymer electrolyte that mainly contains a polymer and an electrolyte, and a semisolid polymer electrolyte that mainly contains a polymer, an electrolyte, and a plasticizer. The polymer electrolyte may be a gel electrolyte containing a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like. In one embodiment, the total content of the polymer electrolyte may be 0.5% by mass or more and 30% by mass or less with respect to the entire positive electrode active material layer 14.

In one embodiment, the positive electrode active material layer 14 may contain a conductive auxiliary agent and/or a binder. In one example, the conductive auxiliary agent is carbon black, a single-walled carbon nanotube (SWCNT), a multi-walled carbon nanotube (MWCNT), a carbon nanofiber (CF), or the like. In one example, the binder is polyvinylidene fluoride, polytetrafluoroethylene, styrene butadiene rubber, an acrylic resin, a polyimide resin, or the like. In one embodiment, the content of the conductive auxiliary agent is 0.5% by mass or more and 30% by mass or less with respect to the entire positive electrode active material layer 14. In one embodiment, the content of the binder may be 0.5% by mass or more and 30% by mass or less with respect to the entire positive electrode active material layer 14.

As illustrated in Figure 2, the positive electrode current collector 12 has a positive electrode end part Q. In one embodiment, the positive electrode end part Q is constituted to extend outward (in the x direction) from the side surface of the positive electrode current collector as a part of the positive electrode current collector. The positive electrode active material layer 14 is not formed on the positive electrode end part Q.

### (Electrode tab 42 for positive electrode)

As illustrated in Figure 1, the electrode tab 42 for the positive electrode is disposed so as to be aligned in the lamination direction (z direction) with respect to each of the positive electrode end parts Q. In one embodiment, the electrode tab 42 for the positive electrode may be disposed above or below each of the positive electrode end parts Q. In one embodiment, the electrode tab 42 for the positive electrode may be disposed between a certain positive electrode end part Q and a positive electrode end part Q adjacent to the certain positive electrode end part Q.

The electrode tab 42 for the positive electrode has a surface that overlaps the positive electrode end part Q in a case of being viewed from the lamination direction, and it is joined to each of the positive electrode end parts Q on this surface. The electrode tab 42 for the positive electrode is electrically connected to each of the positive electrodes 10 by interposing each of the positive electrode end parts Q. A joining trace is formed on the electrode tab 42 for the positive electrode formed due to the joining to each of the positive electrode end parts Q.

**In** one embodiment, the electrode tab 42 for the positive electrode and each of the positive electrode end parts Q may be joined by welding. **The** welding may be, for example, ultrasonic welding, laser welding, resistance welding, or spot welding. The joining position between the electrode tab 42 for the positive electrode and the positive electrode end part Q or the joining position between the positive electrode end parts Q may take the form of one or a plurality of points (spots) or a continuous surface as long as they are electrically connected.

The electrode tab 42 for the positive electrode is formed of a conductive material. The electrode tab 42 for the positive electrode may be formed of, for example, aluminum or an aluminum alloy. In one example, the electrode tab 42 for the positive electrode may be formed of hard aluminum. In one embodiment, the thickness of the electrode tab 42 for the positive electrode may be 0.05 mm or more and 1 mm or less, or may be 0.1 mm or more and 0.5 mm or less.

### (Separator 20)

The separator 20 is disposed on the positive electrode 10. In the example illustrated in Figure 1, the separator 20 is disposed on both surfaces of the positive electrode 10. The separator 20 physically and/or electrically isolates the positive electrode 10 and the negative electrode laminate 30 from each other and also ensures the ion conductivity of lithium ions. In one embodiment, the separator 20 may be at least one kind selected from the group consisting of a porous member having insulating properties, a polymer electrolyte, a gel electrolyte, and an inorganic solid electrolyte. As the separator 20, one kind of member may be used alone, or two or more kinds of members may be used in combination.

In a case where the separator 20 includes a porous member having insulating properties, the pores of the porous member are filled with a substance having ion conductivity (an electrolyte solution, a polymer electrolyte, a gel electrolyte, and/or the like). As a result, the separator 20 exhibits ion conductivity. A material constituting the porous member having insulating properties is not particularly limited, and examples thereof include an insulating polymer material, and specific examples thereof include polyethylene (PE) and polypropylene (PP). That is, the separator 20 may be a porous polyethylene (PE) film, a porous polypropylene (PP) film, or a laminated structure thereof.

In one embodiment, one surface or both surfaces of the separator 20 may be coated with a separator coating layer. As a result, the cycle characteristics of the secondary battery 1 can be improved. In one embodiment, the separator coating layer may be a film that is continuous with a uniform thickness in an area of 50% or more of the surface of the separator 20. In one embodiment, the separator coating layer may contain a binder such as polyvinylidene fluoride (PVDF), a mixed material of styrene butadiene rubber and carboxymethyl cellulose (SBR-CMC), or polyacrylic acid (PAA). In one embodiment, the separator coating layer may be constituted by adding inorganic particles such as silica, alumina, titania, zirconia, or magnesium hydroxide to the above-described binder.

In one embodiment, the thickness of the separator 20 (including a coating layer in a case where the separator 20 includes the coating layer) may be 3.0 µm or more and 40 µm or less. As a result, the volume occupied by the separator 20 can be reduced while the positive electrode 10 and the negative electrode laminate 30 are isolated from each other. In one embodiment, the thickness of the separator 20 may be 5.0 µm or more, 7.0 µm or more, or 10 µm or more. In one embodiment, the thickness of the separator 20 may be 30 µm or less, 20 µm or less, or 10 µm or less.

### (Intermediate laminate LM)

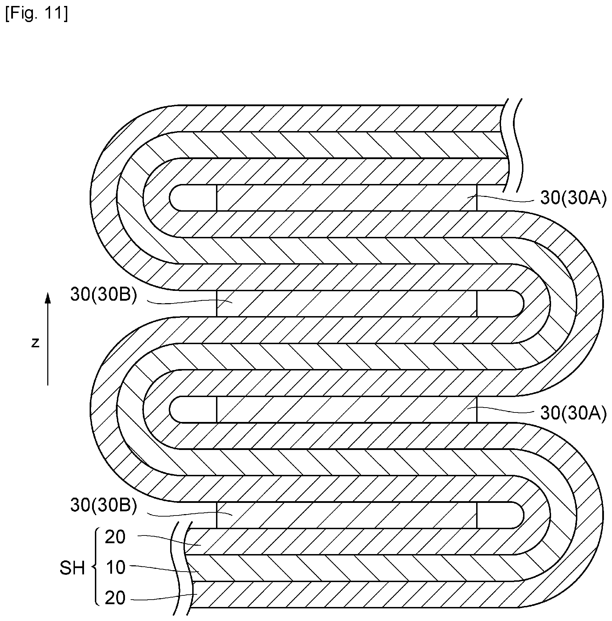

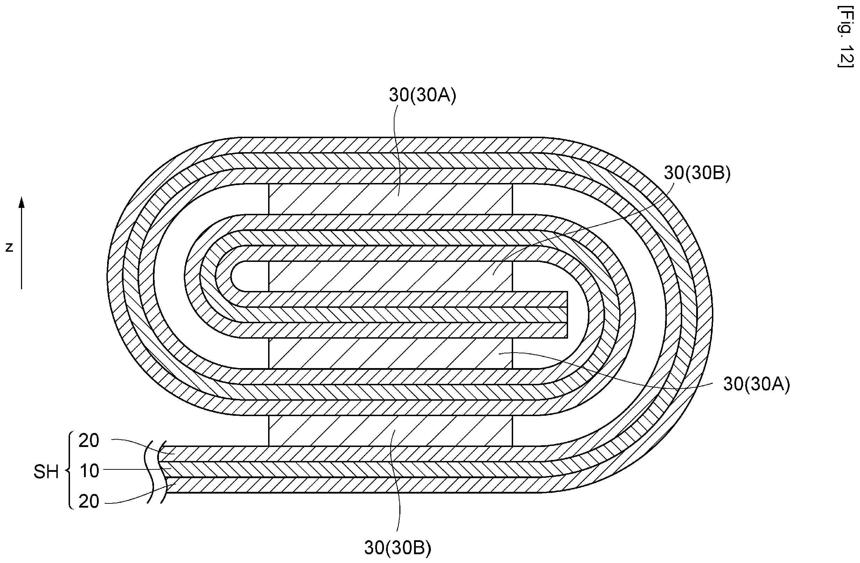

As illustrated in Figure 1, in one embodiment, the positive electrode 10 and the separator 20 constitute an intermediate laminate LM. The intermediate laminate LM may have a structure in which the separator 20, the positive electrode 10, and the separator 20 are laminated in this order in the lamination direction (z direction). The secondary battery 1 includes a plurality of intermediate laminates LM. In one embodiment, as illustrated in Figure 1, each of the plurality of intermediate laminates LM may be constituted as one plate-shaped sheet. In one embodiment, the plurality of intermediate laminates LM may be formed from a single sheet (an example of this aspect will be described later with reference to Figure 11 and Figure 12).

### (Negative electrode laminate 30)

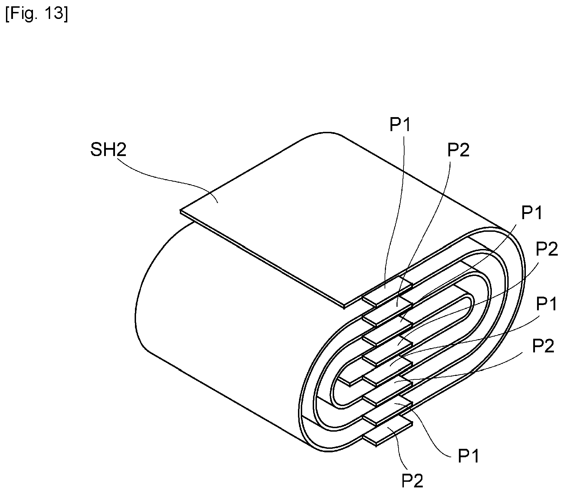

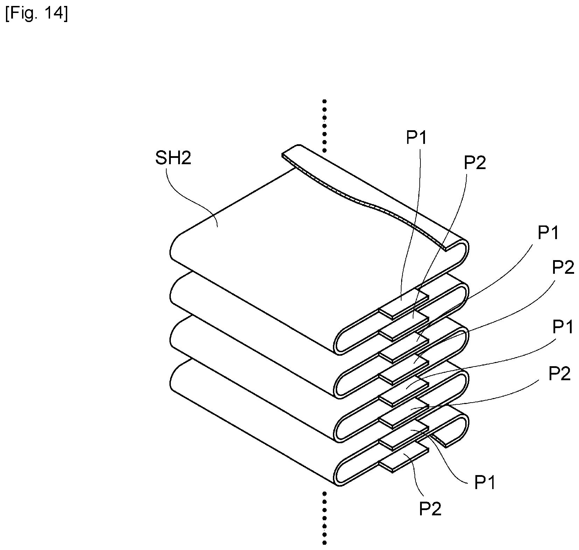

As illustrated in Figure 1, a plurality of the first negative electrode laminate 30A and a plurality of the second negative electrode laminate 30B are alternately laminated in the lamination direction by interposing the intermediate laminate LM (hereinafter, in a case where it is not necessary to distinguish the first negative electrode laminate 30A and the second negative electrode laminate 30B from each other, both are also collectively referred to as a "negative electrode laminate 30", and in addition, regarding each of configurations of the negative electrode laminate 30, in a case where the configuration in the first negative electrode laminate 30A and the configuration in the second negative electrode laminate 30B are distinguished from each other, the first negative electrode laminate 30A and the second negative electrode laminate 30B are distinguished by the symbols "A" and "B", respectively). In one embodiment, as illustrated in Figure 1, each of the plurality of negative electrode laminates 30 may be constituted as one plate-shaped sheet. In one embodiment, the plurality of negative electrode laminates 30 may be formed from a single sheet (an example of this aspect will be described later with reference to Figure 13 and Figure 14).

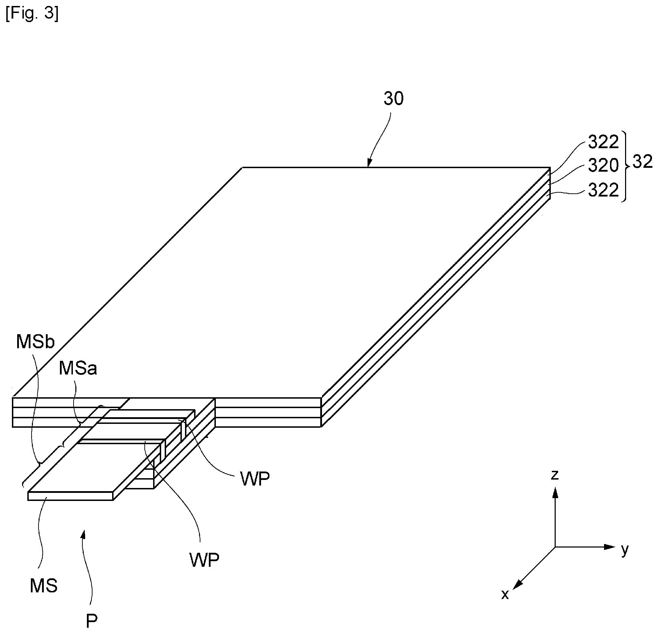

As illustrated in Figure 3, the negative electrode laminate 30 includes a current collector 32 including an insulating layer 320 sandwiched by a pair of conductive layers 322. It is noted that although Figure 3 illustrates a case where the metal sheet MS described later is provided, the secondary battery 1 may not include the metal sheet MS.

The first negative electrode laminate 30A is an example of the first laminate. In one embodiment, the first negative electrode laminate 30A includes a first current collector 32A having a structure in which a first conductive layer 322A, a first insulating layer 320A, and a first conductive layer 322A are laminated in this order in a lamination direction. The first current collector 32A has a first end part P1 that protrudes from the laminate of the negative electrode laminate 30 and the intermediate laminate LM in a case of being viewed from the lamination direction. The first end part P1 extends outward (in the x direction) from the side surface of the first current collector 32A, as a part of the first current collector 32A.

The second negative electrode laminate 30B is an example of the second laminate. In one embodiment, the second negative electrode laminate 30B includes a second current collector 32B having a structure in which a second conductive layer 322B, a second insulating layer 320B, and a second conductive layer 322B are laminated in this order in a lamination direction. The second current collector 32B has a second end part P2 that protrudes from the laminate of the negative electrode laminate 30 and the intermediate laminate LM in a case of being viewed from the lamination direction. The second end part P2 extends outward (in the x direction) from the side surface of the second current collector 32B, as a part of the second current collector 32B.

As described above, since the negative electrode laminate 30 includes a current collector 32 composed of an insulating layer 320 sandwiched by a pair of conductive layers 322, the specific gravity of the negative electrode laminate can be reduced as compared with a case where a current collector consisting of only the conductive layer is used, and the weight of the secondary battery 1 can be reduced.

The insulating layer 320 of the current collector 32 is a layer containing a resin and having insulating properties, and it contains, for example, a sheet-shaped (film-shaped) or fibrous resin. In one embodiment, the thickness of the insulating layer 320 may be 1.0 µm or more and 10 µm or less, 1.5 µm or more and 8.0 µm or less, or 2.0 µm or more and 6.0 µm or less.

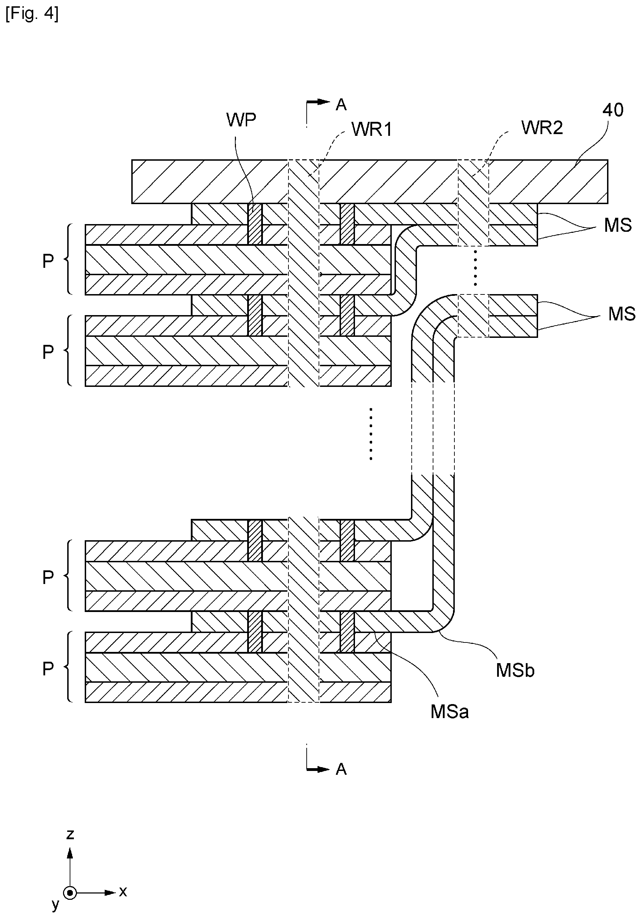

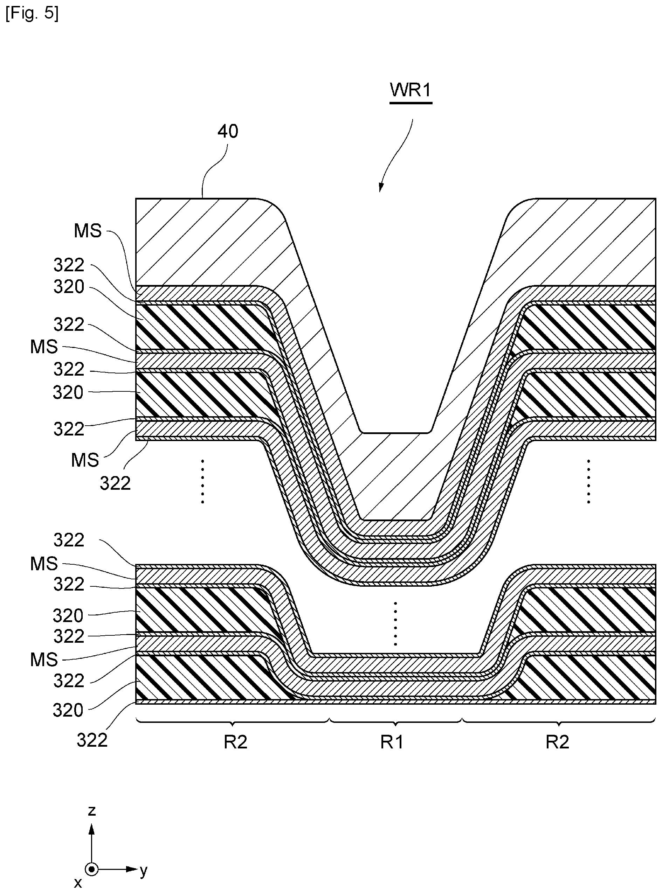

The insulating layer 320 contains a resin having a glass transition temperature of 60°C or lower. As will be described later with reference to Figure 4 and Figure 5, in the secondary battery 1, the first end part P1 and the second end part P2 are joined to the electrode tab 40 for the negative electrode, whereby the first negative electrode laminate 30A and the second negative electrode laminate 30B are electrically connected to each other. In the joining region, the insulating layer 320 is pushed out to the periphery of the joining region, and the conductive layers 322A and B of the first end part P1 and the second end part P2 and the electrode tab 40 for the negative electrode physically come into contact with each other, whereby the electrical connection is realized. Since the insulating layer 320 contains a resin having a glass transition temperature of 60°C or lower, the insulating layer 320 is effectively pushed out in the joining region, and the contact between the conductive layers 322A and B and the electrode tab 40 for the negative electrode is highly reliable. As a result, the resistance value between the electrode tab 40 for the negative electrode and the negative electrode laminate 30 is small, and the output characteristics are high.

The glass transition temperature of the resin contained in the insulating layer 320 may be 50°C or lower, 40°C or lower, 30°C or lower, 20°C or lower, or 10°C or lower. The glass transition temperature may be -80°C or higher, -60°C or higher, - 40°C or higher, -30°C or higher, or -20°C or higher. In one embodiment, the melting point of the resin contained in the insulating layer 320 may be 200°C or lower, 190°C or lower, 180°C or lower, or 170°C or lower. The melting point may be 80°C or higher, 90°C or higher, 100°C or higher, 110°C or higher, 120°C or higher, 130°C or higher, or 140°C or higher. In one embodiment, the resin is a thermoplastic resin. Examples of the resin having a glass transition temperature of 60°C or lower, which is contained in the insulating layer 320, include a polyolefin resin such as polyethylene or polypropylene, and a thermoplastic resin such as polyamide. The insulating layer 320 may be constituted by laminating at least one or more of the resins a plurality of times. In one embodiment, the insulating layer 320 contains a polyolefin resin. In one embodiment, the insulating layer 320 contains polypropylene. In one embodiment, the insulating layer 320 is a sheet consisting of polypropylene. In a case where the insulating layer 320 is polypropylene, the stability with respect to the electrolyte solution is further high, the side reaction is less likely to occur, and thus the density of the insulating layer 320 is further reduced.

The insulating layer 320 can function to melt, for example, in a case where abnormal heat generation occurs in an overcharged state or a high temperature state, to damage the negative electrode laminate 30, and to block a short-circuit current inside the battery. As a result, a rapid temperature rise inside the secondary battery 1 can be suppressed, and the ignition of the battery can be suppressed. That is, the insulating layer 320 can contribute to the improvement of the safety of the secondary battery 1.

The conductive layer 322 of the current collector 32 is formed on both surfaces of the insulating layer 320 so that the insulating layer 320 is sandwiched. The conductive layer 322 is formed from a material having conductivity. In one embodiment, the conductive layer 322 is composed of a conductor that is not alloyed with a lithium element in a battery. In one embodiment, the conductive layer 322 is formed from at least one kind selected from the group consisting of a metal Cu, Ni, Ti**,** Fe, and other metals that do not react with Li, as well as an alloy thereof and stainless steel. The "metal that does not react with Li" may be a metal that does not react with a lithium ion or a lithium metal to form an alloy in the operating state of the secondary battery 1. In one embodiment, the conductive layer 322 is formed from at least one selected from the group consisting of Cu, Ni, and stainless steel. In one embodiment, the conductive layer 322 is formed from Cu, Ni, or an alloy thereof. In one embodiment, the conductive layer 322 is formed by subjecting the above-described material to vapor deposition, sputtering, electrolytic plating, or bonding on the surfaces of both sides of the insulating layer 320. In one embodiment, the thickness of each conductive layer 322 may be 0.5 µm or more and 5.0 µm or less, 0.7 µm or more and 3.0 µm or less, or 0.8 µm or more and 2.0 µm or less.

In one embodiment, the negative electrode laminate 30 may be substantially free of the negative electrode active material. The fact that the negative electrode laminate 30 "is substantially free of the negative electrode active material" includes, for example, that the layer thickness of the negative electrode active material that is deposited on the current collector 32 of the negative electrode laminate 30 at the end of discharging (for example, a state where the open circuit voltage of the battery is 2.5 V or more and 3.6 V or less) is 25 µm or less. In one embodiment, the layer thickness of the negative electrode active material at the end of discharging may be 20 µm or less, 15 µm or less, 10 µm or less, or 5 µm or less, and it may be 0 µm. Since the negative electrode laminate 30 is substantially free of a negative electrode active material, the energy density per volume can be improved in addition to the weight energy density. It is noted that in this case, the secondary battery 1 can also be referred to as an "anode-free lithium battery", a "zero-anode lithium battery", or an "anode-less lithium battery".

In one embodiment, the negative electrode laminate 30 does not have a negative electrode active material before the initial charging of the battery (in a state from the assembly of the battery until the first charging is carried out). That is, in the secondary battery 1, charging and discharging may be carried out by, after the initial charging, depositing lithium metal on the negative electrode and electrolytically dissolving the deposited lithium metal. In this case, the volume and the mass occupied by the negative electrode active material are suppressed, the volume and the mass of the entire battery are reduced, and, in principle, the energy density is increased. It is noted that the fact that "lithium metal is deposited on the negative electrode" encompasses not only that lithium metal is deposited on the surface of the negative electrode but also that lithium metal is deposited on the surface of the solid electrolyte interface (SEI) layer or the surface or inside of the buffer functional layer, which will be described later.

In one embodiment, in a case where the mass of lithium metal deposited on the negative electrode in a state where the voltage is 4.2 V is denoted as M_{4.2} and the mass of lithium metal at a voltage of 3.0 V is denoted as M_{3.0}, M_{3.0}/M_{4.2} may be 40% or less or 35% or less. In one embodiment, the ratio M_{3.0}/M_{4.2} may be 1.0% or more, 2.0% or more, 3.0% or more, or 4.0% or more.

In one embodiment, the thickness of each of the negative electrode laminates 30 may be 1.0 µm or more and 30 µm or less. As a result, the volume occupied by the negative electrode laminate 30 in the secondary battery 1 can be reduced, and the energy density can be improved. The thickness of the negative electrode laminate 30 may be 2.0 µm or more and 20 µm or less, 2.0 µm or more and 18 µm or less, or 3.0 µm or more and 15 µm or less.

In one embodiment, the total number of negative electrode laminates 30 included in the secondary battery 1 may be 5 or more, 10 or more, or 20 or more. In one embodiment, the total number of negative electrode laminates 30 included in the secondary battery 1 may be 50 or less, 40 or less, or 30 or less. In one embodiment, the energy density of the secondary battery 1 may be 300 Wh/kg or more. In one embodiment, the rated capacity of the secondary battery 1 may be 1.5 Ah or more or may be 5 Ah or more.

### (Metal sheet MS)

In one embodiment, the secondary battery 1 further includes (e) a metal sheet disposed between the first end part P1 and the second end part P2. Figure 3 is a perspective view illustrating an example of a negative electrode laminate 30 and a metal sheet MS. In one embodiment, as illustrated in Figure 3, the metal sheet MS is disposed on the first end part P1 and the second end part P2 (hereinafter, both are also referred to as an "end part P" in a case where it is not necessary to distinguish the first end part P1 and the second end part P2 from each other). In one embodiment, the metal sheet MS may be disposed on all the end parts P. In one embodiment, the metal sheet MS may be disposed on a part of the end part P, and the metal sheet MS may not be disposed on the remaining end part P. For example, the metal sheet MS may be disposed at every plurality of end parts P.

In one embodiment, the number and thickness of the metal sheets that are disposed on the end part P may be set based on the position of the end part P in the lamination direction. For example, two or more metal sheets MS may be disposed on an end part P at the center of the secondary battery 1 in the lamination direction, and one metal sheet MS may be disposed on the end parts P at the upper part and the lower part in the lamination direction. In addition, for example, the thickness of the metal sheet MS disposed on the end part P at the center of the secondary battery 1 in the lamination direction may be set to be larger than the thickness of the metal sheet disposed on the end parts P at the upper part and the lower part in the lamination direction. As a result, it is possible to suppress the variation in resistance between the central end parts P.

In one embodiment, the number of the metal sheets MS may be three times or less or may be two times or less with respect to the total number of the end parts P. In one embodiment, the number of the metal sheets MS may be the same as the total number of the end parts P, may be smaller than the total number of the end parts P, or may be half or less of the total number of the end parts P. In one embodiment, the number of the metal sheets MS may be 1/4 or more of the total number of the end parts P, 1/3 or more of the total number of the end parts P, or half or more of the total number of the end parts P.

In one embodiment, as illustrated in Figure 3, the metal sheet MS may be joined to one surface (one surface of the pair of conductive layers 322) of the end part P of the current collector 32. In one embodiment, the metal sheet MS may be joined to the other surface (the other surface of the pair of conductive layers 322) of the end part P of the current collector 32. In one embodiment, one or more metal sheets MS may be provided at the end part P. For example, one metal sheet MS may be joined to each of one surface and the other surface of the end part P of the current collector 32.

In one embodiment, as illustrated in Figure 3, the metal sheet MS includes a first portion MSa and a second portion MSb. The first portion MSa is a portion that overlaps with the end part P in a case of being viewed from the lamination direction (z direction). The second portion MSb is a portion that does not overlap with the end part P in a case of being viewed from the lamination direction (z direction). In one embodiment, the second portion MSb is a portion that extends outward (in the x direction) from the first portion MSa.

As illustrated in Figure 3, the metal sheet MS and the end part P may be preliminarily joined, and a preliminary joining trace WP may be formed between the first portion MSa of the metal sheet MS and the end part P. In one embodiment, the preliminary joining trace WP may be a joining trace by welding, that is, a welding trace. The welding may be, for example, ultrasonic welding, laser welding, resistance welding, or spot welding. The welding is, for example, ultrasonic welding.

In one embodiment, a part or all of the metal sheet MS and the conductive layer 322 may be fused at the end part P and then integrated with each other by heat or the like in the preliminary joining trace WP.

In one embodiment, as illustrated in Figure 3, the metal sheet MS may be constituted to cover only a part of the end part P of the current collector 32 instead of covering the entire end part P. In one embodiment, an insulating layer may be provided in a region of the end part P on the conductive layer 322, where the region is a region where the metal sheet MS is not disposed. In this case, the short-circuiting between the positive electrode 10 and the negative electrode laminate 30 by interposing the conductive layer 322 and/or the metal sheet MS at the end part P is prevented, and the safety of the secondary battery 1 can be improved in a case where the separator 20 has undergone damage or the like. The insulating layer provided in the region where the metal sheet MS is not disposed may be formed of, for example, a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. It is noted that in one embodiment, the metal sheet MS may be constituted to cover the entire surface of the end part P of the current collector.

In one embodiment, the metal sheet MS is formed from at least one kind of material selected from the group consisting of copper, titanium, stainless steel, nickel, and an alloy thereof. In one example, the metal sheet MS is a copper foil. In one example, the metal sheet MS is a hard copper foil. In one example, the metal sheet MS is a soft copper foil. In one example, the metal sheet MS is an electrolytic copper foil. In one example, the metal sheet MS is a wound copper foil. In one embodiment, the metal sheet MS may be formed of the same material as the conductive layer 322.

In one embodiment, the thickness of the metal sheet MS may be set based on the thickness of the insulating layer 320 and the thickness of the conductive layer 322. For example, in a case where the sum of the total thickness (A) of the respective metal sheets MS and the total thickness (B) of the respective conductive layers 322 is denoted as X (= A + B) and the total thickness of the respective insulating layers 320 is denoted as Y, the thickness of the metal sheet MS may be set such that a relationship of 0.85 < X/Y < 2.3 is satisfied. In one embodiment, 1.0 < X/Y < 2.0 may be satisfied. In one embodiment, the thickness of the metal sheet MS may be larger than the thickness of the insulating layer 320. In one embodiment, all the metal sheets MS may have the same thickness, or some of the metal sheets MS may have thicknesses different from each other. In one embodiment, the thickness of the metal sheet MS may be 3.0 µm or more, 5.0 µm or more, or 7.0 µm or more. In one embodiment, the thickness of the metal sheet MS may be 15 µm or less, 12 µm or less, or 10 µm or less.

### (Electrode tab 40 for the negative electrode)

As illustrated in Figure 1, the electrode tab 40 for the negative electrode is disposed to be lined up in the lamination direction (z direction) with respect to each of the end parts P (P1 and P2) of the current collectors 32 (32A and 32B). In one embodiment, the electrode tab 40 for the negative electrode may be disposed above or below the end part P of each current collector 32 (and each metal sheet MS in a case where the metal sheet MS is present). In one embodiment, the electrode tab 40 for the negative electrode may be disposed between a certain end part P and an end part P adjacent to the certain end part P.

The electrode tab 40 for the negative electrode is formed of a conductive material. In one embodiment, the electrode tab 40 for the negative electrode may be formed from at least one kind of material selected from the group consisting of copper, titanium, stainless steel, nickel, and an alloy thereof. In one embodiment, the electrode tab 40 for the negative electrode may be formed from at least one kind of material selected from the group consisting of copper, nickel, and an alloy thereof. In one embodiment, the electrode tab 40 for the negative electrode may be copper that is plated with nickel. In one embodiment, the thickness of the electrode tab 40 for the negative electrode may be 0.05 mm or more and 1 mm or less, or may be 0.1 mm or more and 0.5 mm or less.

The electrode tab 40 for the negative electrode is joined to each end part P of each current collector 32 and to the metal sheet MS in a case where the metal sheet MS is present. As a result, the electrode tab 40 for the negative electrode is electrically connected to each current collector 32 by interposing each end part P. As a result of the joining, a joining trace is formed on the electrode tab 40 for the negative electrode.

Figure 4 is a view for describing a joining state of the electrode tab 40 for the negative electrode, the end part P, and the metal sheet MS in a case where the secondary battery 1 includes the metal sheet MS. Figure 4 schematically illustrates a cross section obtained by cutting, along the xz plane, a position of the end part P, in which the preliminary joining trace WP, the first joining trace WR1, and the second joining trace WR2 are included.

In one embodiment, as illustrated in Figure 4, the preliminary joining trace WP, the first joining trace WR1, and the second joining trace WR2 are provided at positions different from each other in a case of being viewed from the lamination direction. The preliminary joining trace WP is formed for each end part P. In other words, one preliminary joining trace WP is not formed across the plurality of end parts P. On the other hand, the first joining trace WR1 is formed over the entirety of the electrode tab 40 for the negative electrode, each end part P, and the first portion MSa of each metal sheet MS. That is, the first joining trace WR1 is formed to penetrate from the electrode tab 40 for the negative electrode to the end part P of the lowermost layer in the lamination direction. In addition, the second joining trace WR2 is formed over the entirety of the electrode tab 40 for the negative electrode and the second portion MSb of each metal sheet MS. That is, the second joining trace WR2 is formed to penetrate without being intermittently from the electrode tab 40 for the negative electrode to the second portion MSb of the metal sheet MS as the lowermost layer.

The first joining trace WR1 is a joining trace formed due to the joining between the electrode tab 40 for the negative electrode and the first portion MSa of each end part P and each metal sheet MS. The first joining trace WR1 may be one or a plurality of points (spots) in a case of being viewed in planar view, or may be a continuous line or surface. In one embodiment, the first joining trace WR1 may be a joining trace by welding, that is, a welding trace. The welding may be, for example, ultrasonic welding, laser welding, resistance welding, or spot welding. The welding is, for example, ultrasonic welding.

The second joining trace WR2 is a joining trace formed due to the joining between the electrode tab 40 for the negative electrode and the second portion MSb of each metal sheet MS. The second joining trace WR2 may be one or a plurality of points (spots) in a case of being viewed in planar view, or may be a continuous line or surface. In one embodiment, the second joining trace WR2 may be a joining trace by welding, that is, a welding trace. The welding may be, for example, ultrasonic welding, laser welding, resistance welding, or spot welding. The welding is, for example, ultrasonic welding.

In one embodiment, as illustrated in Figure 4, the second portion MSb of each metal sheet MS extends outward (in the x direction) from the first portion MSa of the metal sheet MS joined to the end part P. The thermal conductivity of the metal sheet MS tends to be higher than the thermal conductivity of the end part P including the insulating layer 320. Therefore, the heat generated at the end part P (the current collector 32) is transferred from the first portion MSa of the metal sheet MS to the second portion MSb on the outer side of the first portion MSa, and it can be released to the outside directly or through the electrode tab 40 for the negative electrode from the second portion MSb. As a result, the heat generated inside the secondary battery 1 can be efficiently released to the outside. That is, the heat dissipation properties of the secondary battery 1 can be improved.

In one embodiment, the second portions MSb of the respective metal sheets MS are joined to each other without interposing the end part P in the second joining trace WR2 (unlike the first portion MSa in the first joining trace WR1). That is, the joining region (second joining trace WR2) between the electrode tab 40 for the negative electrode and the second portion MSb is formed of only the metal. Therefore, the resistance in the second joining trace WR2 can be suppressed to be low. As a result, the output characteristics of the secondary battery 1 can be improved.

Figure 5 is a view for describing the first joining trace WR1. Figure 5 schematically illustrates a cross section (an A-A cross section in Figure 4) obtained by cutting the first joining trace WR1 along the yz plane. As illustrated in Figure 5, the cross section of the first joining trace WR1 includes the first region R1 and the second region R2. In one embodiment, the cross section of the first joining trace WR1 may have a recessed part that is recessed in one of the lamination directions.

In the first region R1, the conductive layer 322 of the end part P and the metal sheet MS (first portion MSa) are integrated and laminated, and are joined to the electrode tab 40 for the negative electrode. Here, being integrated and laminated include a state in which a part or all of the respective conductive layers 322 and the metal sheet MS (first portion MSa) are fused by heat or the like (a state in which the respective layers cannot be distinguished from each other). That is, in the first joining trace WR1, the conductive layer 322 at the end part P, the electrode tab 40 for the negative electrode, and the metal sheet MS constitute a joining region, and the electrode tab 40 for the negative electrode is electrically connected to the plurality of negative electrode laminates 30.

In one embodiment, the first region R1 may be substantially free of the insulating layer 320 along the lamination direction. The first region R1 provides a physical path for electrically connecting the electrode tab 40 for the negative electrode to each conductive layer 322 and the metal sheet MS. In the secondary battery 1, since the insulating layer 320 is constituted as described above, the insulating layer 320 is effectively excluded from the first region R1, and the resistance value in the first region R1 is low.

In one embodiment, the first region R1 may be positioned between the two second regions R2. In one embodiment, the maximum thickness of the first region R1 may be half or less of the maximum thickness of the second region R2.

In the second region R2, a pair of conductive layers 322 sandwiching the insulating layer 320 and the metal sheet MS are laminated. That is, the second region R2 is a region including the insulating layer 320 along the lamination direction.

In one embodiment, the first joining trace WR1 may be formed by welding. In this case, the first joining trace WR1 is a welding trace. In the welding, the electrode tab 40 for the negative electrode, the end part P, and the first portion MSa of the metal sheet MS may be pressed along the lamination direction. As a result, the insulating layer 320 is softened at the welded position and is pushed outward from the welded position in the width direction (the left-right direction in Figure 5). In addition, at the welded position, each conductive layer 322 and the metal sheet MS are thermally melted and integrated. As a result, the first region R1 and the second region R2 can be formed.

By the way, as described above, the insulating layer 320 can suppress a rapid temperature rise inside the secondary battery 1 and can suppress the ignition of the battery, for example, in a case where abnormal heat generation occurs in an overcharged state or a high temperature state. In the current collector having a configuration in which the insulating layer is sandwiched between the conductive layers, it is difficult to ensure stable joining quality (variation control) in the joining between the end part of the current collector and the electrode tab or in each layer as the number of current collectors increases or as the thickness of the insulating layer increases. For example, in a case where a strong force is applied in an attempt to weld the electrode tab and all the end parts, there is a concern that the conductive layer at the end part may be damaged or fractured, for example, in a case where the conductive layer is thin. On the other hand, in a case where the electrode tab is welded with a force that does not damage the conductive layer, there is a concern that the joining may be insufficient and the resistance between the end part of the current collector and the electrode tab may increase.

In this regard, in the secondary battery 1 according to the present embodiment, since the insulating layer 320 is formed of a material that is easy to be processed as described above, the negative electrode laminate 30 and the electrode tab 40 for the negative electrode are easily joined to each other.

In addition, in the secondary battery 1 according to one embodiment, the metal sheet MS is disposed between at least one end part P and one end part P. In this case, the metal sheet MS functions as an additional conductive layer of the conductive layer 322 in the first joining trace WR1, and it increases the proportion of the conductive layer to the insulating layer 320. Therefore, the increase in resistance in the first joining trace WR1 can be suppressed. As a result, the output characteristics of the secondary battery 1 can be improved. In addition, the metal sheet MS can also function as a protective layer of the conductive layer 322 at the end part P in a case of joining the electrode tab 40 for the negative electrode to the end part P. As a result, for example, in a case where the total number (the number of laminations) of the negative electrode laminates 30 of the secondary battery 1 is large, the damage and fracture of the conductive layer 322 can be suppressed even in a case where the electrode tab 40 for the negative electrode and each end part P are pressed and joined with a strong force. This makes it possible to improve the production yield of the secondary battery 1. In one embodiment, the resistance of the second joining trace WR2 may be 5.0 mΩ or less, may be 3.0 mΩ or less, may be 1.0 mΩ or less, or may be 0.5 mΩ or less. In one embodiment, the resistance of the second joining trace WR2 may be 4.0 mΩ or less, may be 3.0 mΩ or less, may be 2.5 mΩ or less, may be 1.5 mΩ or less, may be 1.0 mΩ or less, or may be 0.8 mΩ or less. In one embodiment, the average value of the resistances between the electrode tab 40 for the negative electrode and the negative electrode laminate 30, which are measured by the measuring method in Examples, may be 4.0 mΩ or less, may be 3.0 mΩ or less, may be 2.5 mΩ or less, may be 1.5 mΩ or less, may be 1.0 mΩ or less, or may be 0.8 mΩ or less. The resistance may be 0 mΩ or more or 0.1 mΩ or more.

In one embodiment, the secondary battery 1 may have the first joining trace WR1 and may not have the second joining trace WR2. In one embodiment, the secondary battery 1 may not have the preliminary joining trace WP.

It is noted that in a case where the secondary battery 1 does not include the metal sheet MS, the secondary battery 1 does not have the preliminary joining trace WP and the second joining trace WR2 in Figure 4 and Figure 5. In this case, the cross section of the first joining trace WR1 includes the first region R1 and the second region R2 as in the case illustrated in Figure 5. In the first region R1, the conductive layers 322 at the plurality of end parts P are integrated and laminated and then are joined to the electrode tab 40 for the negative electrode. That is, in the first joining trace WR1, the conductive layer 322 at the end part P and the electrode tab 40 for the negative electrode constitute a joining region, and the electrode tab 40 for the negative electrode is electrically connected to the plurality of negative electrode laminates 30.

In one embodiment in which the secondary battery 1 does not include the metal sheet MS, the first region R1 may be substantially free of the insulating layer 320 along the lamination direction. The first region R1 provides a physical path for electrically connecting the gap between the electrode tab 40 for the negative electrode and each conductive layer 322. In the secondary battery 1, since the insulating layer 320 is constituted as described above, the insulating layer 320 is effectively excluded from the first region R1, and the resistance value in the first region R1 is low.

In one embodiment in which the secondary battery 1 does not include the metal sheet MS, the first region R1 may be positioned between the two second regions R2. In one embodiment, the maximum thickness of the first region R1 may be half or less of the maximum thickness of the second region R2.

In one embodiment in which the secondary battery 1 does not include the metal sheet MS, a pair of conductive layers 322 sandwiching the insulating layer 320 is laminated in the second region R2. That is, the second region R2 is a region including the insulating layer 320 along the lamination direction.

In one embodiment in which the secondary battery 1 does not include the metal sheet MS, the first joining trace WR1 may be formed by welding. In this case, the first joining trace WR1 is a welding trace. In the welding, the electrode tab 40 for the negative electrode and the end part P may be pressed along the lamination direction. As a result, the insulating layer 320 is softened at the welded position and is pushed outward from the welded position in the width direction (the left-right direction in Figure 5). In addition, at the welded position, each conductive layer 322 is thermally melted and integrated. As a result, the first region R1 and the second region R2 can be formed.

### (Electrolyte solution)

In one embodiment, the secondary battery 1 may contain an electrolyte solution. The electrolyte solution is a liquid containing a solvent and an electrolyte, and it has ion conductivity. The electrolyte solution which may also be referred to as a liquid electrolyte acts as a conductive path for lithium ions. Therefore, in a case where the secondary battery 1 has an electrolyte solution, the internal resistance is reduced, and the energy density, the capacity, and the cycle characteristics can be improved.

The electrolyte solution may be, for example, a solution that fills the housing (pouch) of the secondary battery 1. In addition, for example, the electrolyte solution may be infiltrated into the separator 20, and in addition, it may be retained by the polymer to constitute a polymer electrolyte or a gel electrolyte.

The electrolyte contained in the electrolyte solution may be, for example, a lithium salt. The lithium salt may be, for example, one selected from the group consisting of Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄, or a combination of two or more thereof.

As a solvent to be contained in the electrolyte solution, for example, a non-aqueous solvent having a fluorine atom (hereinafter, referred to as a "fluorinated solvent") and a non-aqueous solvent having no fluorine atom (hereinafter, referred to as a "non-fluorine solvent") may be added.

The fluorinated solvent may be, for example, 1,1,2,2-tetrafluoroethyl-2,2,3,3-tetrafluoropropyl ether, 1,1,2,2-tetrafluoroethyl-2,2,2-trifluoroethyl ether, or 1H,1H,5H-octafluoropentyl-1,1,2,2-tetrafluoroethyl ether.

The non-fluorine solvent may be triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, or 12-crown-4.

One or two or more of the fluorinated solvents and/or the non-fluorine solvents may be freely used either singly or in combination at any proportion. The contents of the fluorinated solvent and the non-fluorine solvent are not particularly limited, and the proportion of the fluorinated solvent in the total volume of the solvent may be 0% to 100% by volume, and the proportion of the non-fluorine solvent in the total volume of the solvent may be 0% to 100% by volume.

### [Manufacturing method for secondary battery]

Next, an example of a manufacturing method for the secondary battery 1 (hereinafter, also referred to as "the present manufacturing method") will be described. The present manufacturing method may include a step ST1 of preparing a negative electrode laminate sheet, a step ST2 of joining a metal sheet to the negative electrode laminate sheet, a step ST3 of cutting out a negative electrode laminate from the negative electrode laminate sheet, a step ST4 of assembling a molded body, a step ST5 of joining each electrode tab to each current collector, and a step ST6 of sealing the molded body in an airtight container. In one embodiment, in the present manufacturing method, a secondary battery which does not include a metal sheet may be manufactured without including the above-described step ST2.

First, in the step ST1, a negative electrode laminate sheet is prepared. The negative electrode laminate sheet may be a strip-shaped sheet having a longitudinal direction and a lateral direction. In one embodiment, the negative electrode laminate sheet may be composed of a current collector. The current collector has an insulating layer and a conductive layer that is formed to sandwich the insulating layer. The insulating layer has the configuration described in the section of "(Negative electrode laminate 30)" and contains, for example, a resin having a glass transition temperature of 60°C or lower.

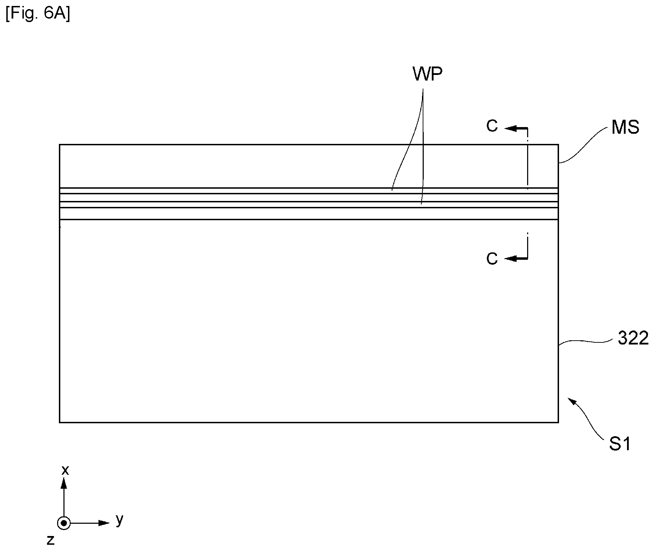

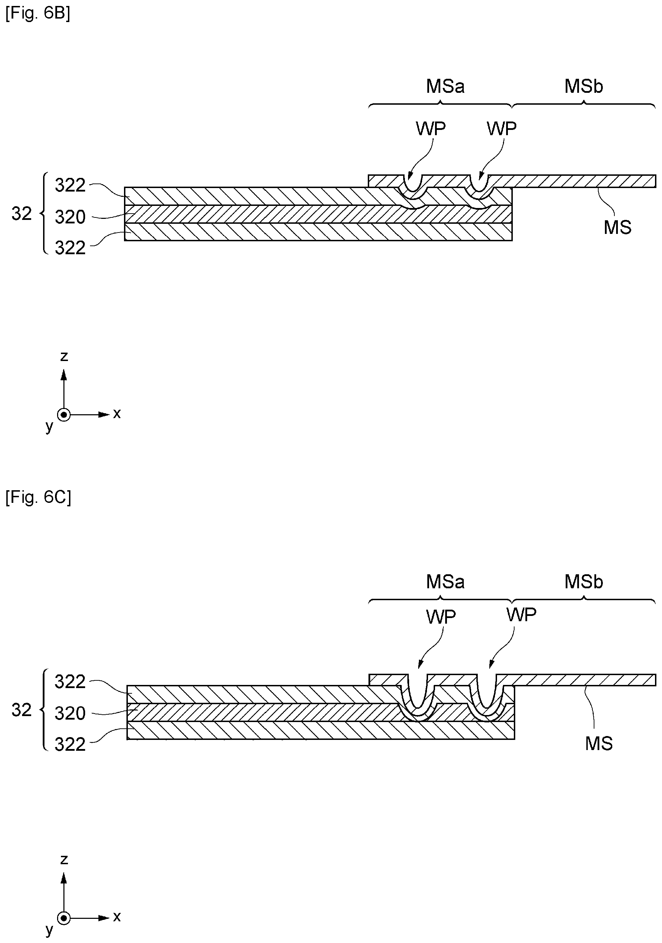

Next, in the step ST2, the metal sheet is joined to one end of the negative electrode laminate sheet in the lateral direction. Figure 6A is a plan view of a negative electrode laminate sheet S1 to which the metal sheet MS has been joined. Figure 6B to Figure 6D are examples of a C-C cross section of Figure 6A.

In the step ST2, the metal sheet MS is joined to the negative electrode laminate sheet S1 such that the metal sheet MS has a portion (first portion MSa) overlapping one end of the negative electrode laminate sheet S1 in the lateral direction and a portion (second portion MSb) extending outward in the lateral direction from the one end of the negative electrode laminate sheet S1 (see Figure 6B to Figure 6D). Then, the preliminary joining trace WP is formed in a line shape, for example, along the longitudinal direction by the joining in the step ST2 (see Figure 6A). In the step ST2, the metal sheet MS may be joined to the negative electrode laminate sheet S1 by welding. The welding may be, for example, ultrasonic welding, laser welding, resistance welding, or spot welding. The welding is, for example, ultrasonic welding.

In one embodiment, the joining in the step ST2 may be carried out by pressing the metal sheet MS against the current collector 32. For example, as illustrated in Figure 6B and Figure 6C, the preliminary joining trace WP may be formed such that the first portion MSa of the metal sheet MS is recessed toward the current collector 32 side. In one embodiment, as illustrated in Figure 6B, the preliminary joining trace WP may be provided between the metal sheet MS and one conductive layer 322 (which comes into contact with the metal sheet MS). In this case, in the preliminary joining trace WP, the metal sheet MS is not electrically connected to the other conductive layer 322. In one embodiment, the preliminary joining trace WP may be provided between the metal sheet MS and both conductive layers 322 as illustrated in Figure 6C. In this case, in the preliminary joining trace WP, the metal sheet MS is electrically connected to both conductive layers 322.

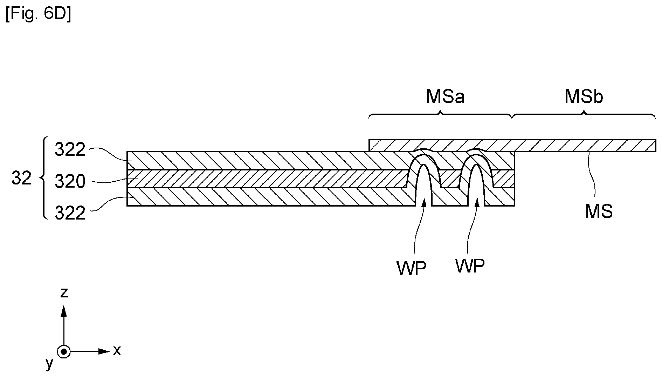

In one embodiment, the joining in the step ST2 may be carried out by pressing the current collector 32 against the metal sheet MS. For example, as illustrated in Figure 6D, the preliminary joining trace WP may be formed such that the current collector 32 is recessed toward the first portion MSa side of the metal sheet MS. In this case, in the preliminary joining trace WP, the metal sheet MS is electrically connected to both conductive layers 322.

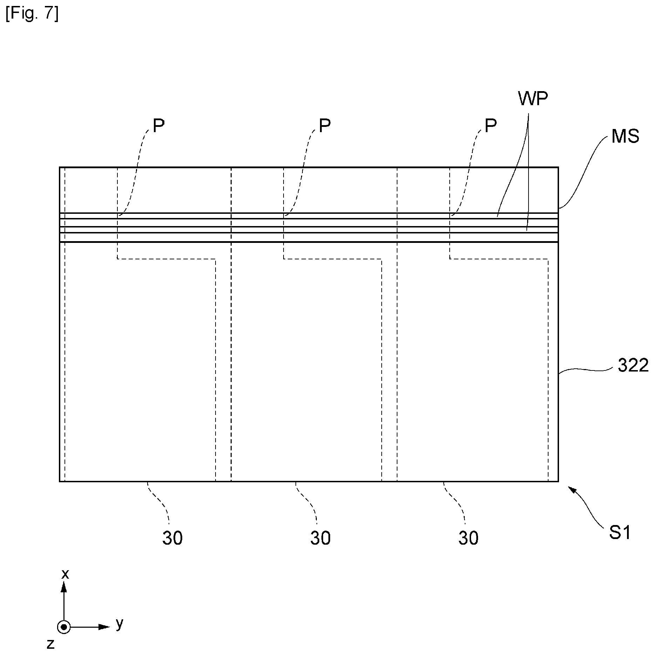

Next, in the step ST3, the negative electrode laminate 30 is cut out. Specifically, using a cutting blade, a laser, or the like, a plurality of negative electrode laminates 30 having a given shape is cut out from a state in which the metal sheet MS is joined to the negative electrode laminate sheet S1 as illustrated in Figure 7. As a result, a plurality of negative electrode laminates 30 is obtained.

Next, in the step ST4, a molded body in which the negative electrode laminate 30 and the intermediate laminate LM are alternately laminated is assembled. Specifically, the plurality of negative electrode laminates 30 prepared in the step ST3 is disposed in the lamination direction to be spaced apart from each other by interposing the intermediate laminate LM as illustrated in Figure 1. It is noted that in a case where the positive electrode 10 and the separator 20 are constituted in a sheet shape as described later, each negative electrode laminate 30 may be disposed between the intermediate laminates LM formed by folding the sheet in a zigzag shape (zigzag form) (see Figure 11) or between the intermediate laminates LM formed by winding the sheet (see Figure 12).

Next, in the step ST5, the electrode tab and the current collector are joined to each other. Specifically, the end part P of the current collector 32 and the metal sheet MS in each negative electrode laminate 30 are joined to the electrode tab 40 for the negative electrode so that the first joining trace WR1 (joining region) described above is formed. In this case, the metal sheet MS may be additionally joined to the electrode tab 40 for the negative electrode so that the above-described second joining trace WR2 is formed. In addition, the positive electrode end part Q is joined to the electrode tab 42 for the positive electrode such that a joining trace is formed. The joining may be carried out by ultrasonic welding, laser welding, resistance welding, or spot welding.

Next, in the step ST6, the molded body prepared in the step ST5 is sealed in an airtight container. In one embodiment, the electrolyte solution may be sealed in an airtight container. The airtight container may be, for example, a laminated film. In the manner as described above, the secondary battery 1 is manufactured.

In the present manufacturing method described in detail above, the metal sheet MS is joined in advance to the negative electrode laminate sheet S1 in the step ST2. Therefore, in the step ST3, the metal sheet MS can be cut out at the same time in accordance with the shape of the end part P of the negative electrode laminate sheet S1. That is, another step of cutting out the metal sheet MS in accordance with the shape of the end part P is not required. In addition, in the step ST5, it is not necessary to align the position of the metal sheet MS and the position of the end part P of the current collector 32, and thus the electrode tab 40 for the negative electrode and the end part P are easily joined to each other. Further, in the step ST5, it is possible in principle to provide the first joining trace WR1 such that the first joining trace WR1 does not overlap with the preliminary joining trace WP in the lamination direction. By providing the first joining trace WR1 such that the first joining trace WR1 does not overlap with the preliminary joining trace WP in the lamination direction, the joining state of the first joining trace WR1 is improved, and the increase in resistance of the first joining trace WR1 can be suppressed, as compared with a case where both the first joining trace WR1 and the preliminary joining trace WP are provided to overlap with each other.

In addition, since the negative electrode laminate sheet has the configuration described in the section of "Negative electrode laminate 30" and contains, for example, a resin having a glass transition temperature of 60°C or lower, the insulating layer 320 is effectively displaced from the joining region in a case where the end part P and the metal sheet MS are joined to the electrode tab 40 for the negative electrode and the first joining trace WR1 is formed. As a result, a secondary battery in which the resistance value of the joining region is low and output characteristics are high is manufactured.

### [Method of using secondary battery]

The secondary battery 1 is charged and discharged by connecting the electrode tab 40 for the negative electrode to one end of the external circuit and connecting the electrode tab 42 for the positive electrode to the other end of the external circuit. The external circuit may be, for example, a resistor, a power source, an apparatus, a device, another battery, or a potentiostat. The respective end parts P of the plurality of negative electrode laminates 30 may be connected to the external circuit at the same potential. In addition, the respective positive electrode end parts Q of the plurality of positive electrodes 10 may be connected to the external circuit at the same potential.

In a case where a voltage is applied between the electrode tab 40 for the negative electrode and the electrode tab 42 for the positive electrode such that a current flows from the electrode tab 40 for the negative electrode to the electrode tab 42 for the positive electrode through an external circuit, the secondary battery 1 is charged, and lithium metal is deposited on the current collector 32 of the negative electrode laminate 30. In a case where the electrode tab 40 for the negative electrode and the electrode tab 42 for the positive electrode in the secondary battery 1 after charging are connected through a desired external circuit, the secondary battery 1 is discharged, and the lithium metal deposited on the current collector 32 is electrolytically dissolved. **In** one embodiment, the secondary battery 1 is a battery in which lithium metal is deposited on the current collector 32 of the negative electrode laminate 30 during charging, and the deposited lithium metal is electrolytically dissolved during discharging.

**In** one embodiment, in the secondary battery 1, a solid electrolyte interfacial layer (SEI layer) may be formed on the surface of the current collector 32 or the surface of the separator 20 (that is, at the interface between the current collector 32 and the separator 20) by the first charging (initial charging) after the assembly of the battery. **The** SEI layer may contain, for example, an inorganic compound containing lithium or an organic compound containing lithium. **In** one embodiment, the thickness of the SEI layer is 1.0 nm or more and 10 µm or less. **In** a case where the SEI layer is formed in the secondary battery 1, lithium metal is deposited or dissolved at the current collector 32 and/or an interface between the separator 20 and the SEI layer due to charging and discharging.

According to the secondary battery 1 described above, the output characteristics and the productivity of the battery are capable of being improved.

### <Second embodiment>

**The** secondary battery 1 according to the second embodiment is different from the secondary battery 1 according to the first embodiment in that the positive electrode current collector 12 in the positive electrode 10 is a current collector that is configured to sandwich an insulating layer with a pair of conductive layers. A configuration of the positive electrode 10 of the secondary battery 1 according to the second embodiment will be described with reference to Figure 7. It is noted that the secondary battery 1 according to the second embodiment is the same or similar to the secondary battery 1 according to the first embodiment except for the configuration of the positive electrode 10.

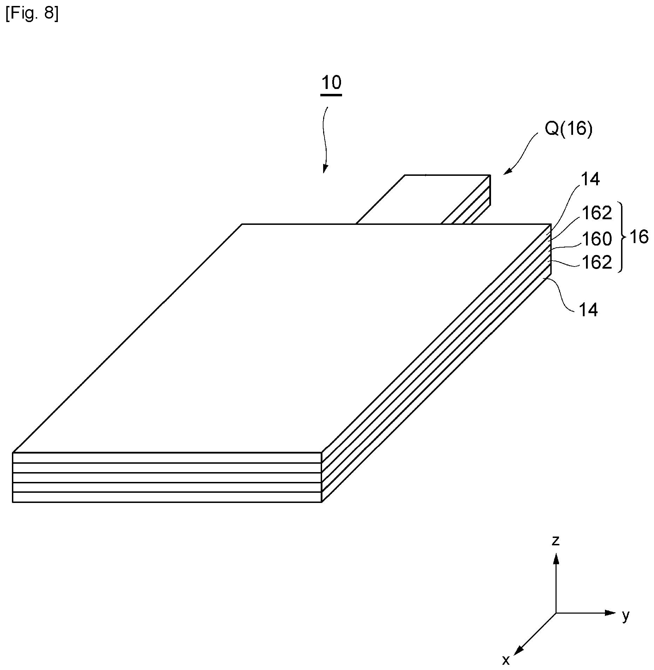

Figure 8 is a perspective view illustrating the positive electrode 10 in the secondary battery 1 according to the second embodiment. As illustrated in Figure 8, the positive electrode 10 is constituted to include a positive electrode current collector 16 and positive electrode active material layers 14 that are respectively disposed on both surfaces of the positive electrode current collector 16. The positive electrode active material layer 14 may be the same as that described in Figure 2. The positive electrode current collector 16 may be composed of a positive electrode insulating layer 160 and a pair of positive electrode conductive layers 162 that are disposed to sandwich the positive electrode insulating layer 160.

In one embodiment, the positive electrode insulating layer 160 may be formed of a sheet-shaped (film-shaped) or fibrous resin. The positive electrode conductive layer 162 is composed of a conductor that does not react with lithium ions in the battery. In an embodiment, the positive electrode conductive layer 162 is composed of at least one kind of material selected from the group consisting of aluminum, titanium, stainless steel, nickel, and alloys thereof. Since the positive electrode current collector 16 includes the positive electrode insulating layer 160, while ensuring a thickness (rigidity) required for the positive electrode current collector 16, the weight of the positive electrode current collector 16 can be reduced as compared with a case where the positive electrode current collector 16 is composed of only the conductive layer. In one embodiment, the positive electrode conductive layer 162 is formed by subjecting the above-described material to vapor deposition, sputtering, electrolytic plating, or bonding on the surfaces of both sides of the positive electrode insulating layer 160. In one embodiment, the thickness of each of the positive electrode conductive layers 162 may be 0.5 µm or more and 5.0 µm or less, 0.7 µm or more and 3.0 µm or less, or 0.8 µm or more and 2.0 µm or less.

In one embodiment, the positive electrode insulating layer 160 is a layer containing a resin and having insulating properties, and it contains, for example, a sheet-shaped (film-shaped) or fibrous resin. In one embodiment, the thickness of the positive electrode insulating layer 160 may be 1.0 µm or more and 10 µm or less, or may be 1.5 µm or more and 6.0 µm or less. In one embodiment, the resin in the positive electrode insulating layer 160 may be, for example, at least one of a polyolefin resin such as polyethylene terephthalate (PET), polyethylene, or polypropylene, or a thermoplastic resin such as polystyrene, polyvinyl chloride, or polyamide.

In one embodiment, the positive electrode insulating layer 160 contains a resin having a glass transition temperature of 60°C or lower. The glass transition temperature of the resin contained in the positive electrode insulating layer 160 may be 50°C or lower, 40°C or lower, 30°C or lower, 20°C or lower, or 10°C or lower. The glass transition temperature may be -80°C or higher, -60°C or higher, -40°C or higher, -30°C or higher, or -20°C or higher. In one embodiment, the melting point of the resin contained in the positive electrode insulating layer 160 may be 200°C or lower, 190°C or lower, 180°C or lower, or 170°C or lower. The melting point may be 80°C or higher, 90°C or higher, 100°C or higher, 110°C or higher, 120°C or higher, 130°C or higher, or 140°C or higher. In one embodiment, the resin is a thermoplastic resin. Examples of the resin having a glass transition temperature of 60°C or lower, which is contained in the positive electrode insulating layer 160, include a polyolefin resin such as polyethylene or polypropylene, and a thermoplastic resin such as polyamide. The positive electrode insulating layer 160 may be constituted by laminating at least one or more of the resins a plurality of times. In one embodiment, the positive electrode insulating layer 160 contains a polyolefin resin. In one embodiment, the positive electrode insulating layer 160 contains polypropylene. In one embodiment, the insulating layer 320 is a sheet consisting of polypropylene. In one embodiment, the positive electrode insulating layer 160 has the same configuration as the insulating layer 320 in the negative electrode laminate 30. In one embodiment, the positive electrode insulating layer 160 has a configuration different from the configuration of the insulating layer 320 in the negative electrode laminate 30.

As illustrated in Figure 8, the positive electrode current collector 16 has a positive electrode end part Q. In one embodiment, the positive electrode end part Q is constituted to extend outward (in the x direction) from the side surface of the positive electrode current collector as a part of the positive electrode current collector. The positive electrode active material layer 14 is not formed on the positive electrode end part Q.

### <Third embodiment>

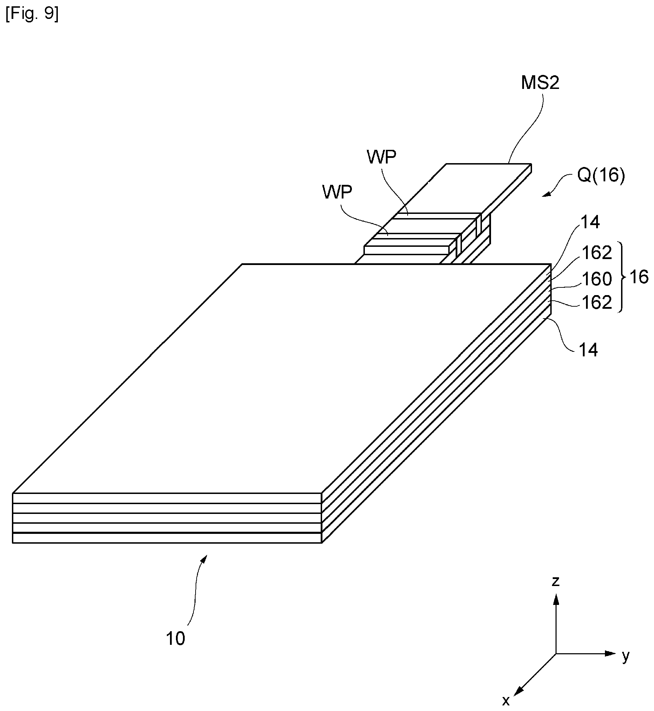

The secondary battery 1 according to the third embodiment is different from the secondary battery 1 according to the second embodiment in that a metal sheet MS2 for a positive electrode is provided. A configuration of the positive electrode 10 of the secondary battery 1 according to the third embodiment will be described with reference to Figure 9. It is noted that the secondary battery 1 according to the second embodiment is the same or similar to the secondary battery 1 according to the first embodiment and the second embodiment except for the configuration of the positive electrode 10.

Figure 9 is a perspective view illustrating an example of the positive electrode 10 in the secondary battery 1 according to the third embodiment. In one embodiment, the metal sheet MS2 is provided at the positive electrode end part Q of the positive electrode 10. The example illustrated in Figure 9 is an example in which the metal sheet MS2 for a positive electrode is provided on one surface of the positive electrode end part Q of the positive electrode 10 illustrated in Figure 8. The above description regarding the number and the disposition position of the metal sheets MS for a negative electrode may be applied to the metal sheet MS2. In one embodiment, the number and the disposition position of the metal sheets MS2 are the same as the number and the disposition position of the metal sheet MS for a negative electrode. In one embodiment, the number and the disposition position of the metal sheets MS2 are different from those of the metal sheet MS for a negative electrode.

The metal sheet MS2 may include the first portion MSa and the second portion MSb, similarly to the metal sheet MS for a negative electrode. In addition, in the metal sheet MS2 and the positive electrode end part Q, the preliminary joining trace WP, the first joining trace WR1, and the second joining trace WR2 may be formed, similarly to the end part P and the metal sheet MS of the negative electrode laminate 30. The first joining trace WR1 may include the first region R1 and the second region R2.

In one embodiment, the metal sheet MS2 is formed from at least one kind of material selected from the group consisting of aluminum, titanium, stainless steel, nickel, and an alloy thereof. In one example, the metal sheet MS2 is a hard aluminum foil. In one example, the metal sheet MS2 is a soft aluminum foil. The soft aluminum foil may be formed by subjecting a hard aluminum foil to a heat treatment at a high temperature (around 400°C). In one embodiment, the metal sheet MS2 may be formed of the same material as the positive electrode conductive layer 162.

The secondary battery 1 according to the third embodiment includes an aspect in which the positive electrode end part Q of the positive electrode 10 of the secondary battery 1 according to the first embodiment has the metal sheet MS2. That is, in the positive electrode 10 of the secondary battery according to the third embodiment, the positive electrode current collector may be constituted to be the same as or similar to the positive electrode current collector 12 of the positive electrode 10 in the secondary battery according to the first embodiment, without including the positive electrode insulating layer.

### <Fourth embodiment>

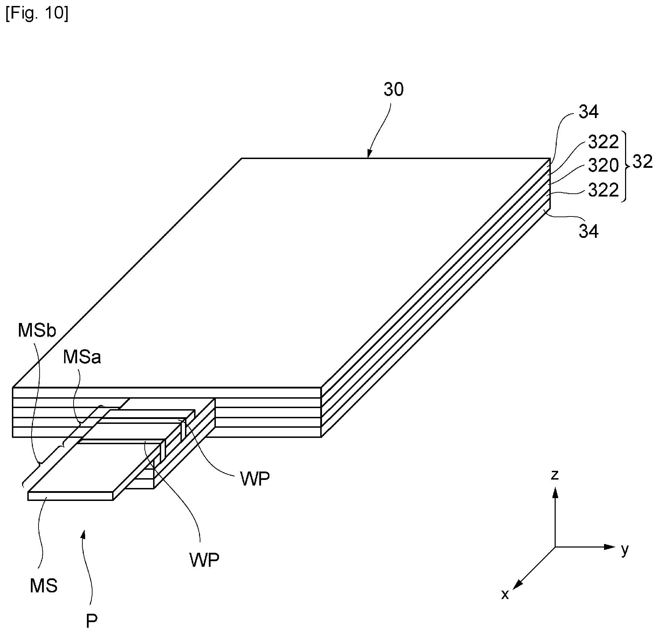

The secondary battery 1 according to the fourth embodiment is different from the secondary battery 1 according to the first embodiment in that the negative electrode laminate 30 has a negative electrode active material layer. A configuration of the negative electrode laminate 30 of the secondary battery 1 according to the fourth embodiment will be described with reference to Figure 10. **It** is noted that the secondary battery 1 according to the fourth embodiment is the same or similar to the secondary battery 1 according to the first embodiment except for the configuration of the negative electrode laminate 30.

Figure 10 is a perspective view illustrating an example of the negative electrode laminate 30 in the secondary battery 1 according to the fourth embodiment. As illustrated in Figure 10, the negative electrode laminate includes the current collector 32 and a negative electrode active material layer 34. In one embodiment, the negative electrode laminate 30 may have a structure in which the negative electrode active material layer 34, the current collector 32, and the negative electrode active material layer 34 are laminated in this order in the lamination direction. The current collector 32 has an end part P exposed from the negative electrode active material layer 34. That is, the negative electrode active material layer 34 is not formed on the end part P. The end part P extends outward (in the x direction) from the side surface of the current collector 32, as a part of the current collector 32.

The current collector 32 in the secondary battery 1 according to the fourth embodiment may be constituted to be the same as or similar to the current collector 32 in the secondary battery 1 according to the first embodiment. That is, the negative electrode laminate 30 in the secondary battery 1 according to the fourth embodiment may be constituted to be the same as or similar to the negative electrode laminate 30 in the secondary battery 1 according to the first embodiment, except that the negative electrode laminate 30 has the negative electrode active material layer 34 on both surfaces or one surface of the current collector 32.

As the negative electrode active material layer 34, a publicly known material may be appropriately selected depending on the use application. The thickness of the negative electrode active material layer 34 may be appropriately adjusted according to the desired capacity and rate characteristics of the battery. In one embodiment, the thickness of each of the negative electrode active material layers 34 is, for example, 20 µm or more and 150 µm or less.

In one embodiment, the negative electrode active material layer 34 has a negative electrode active material. The negative electrode active material is a substance for holding a lithium element in the negative electrode active material layer 34, and can also be referred to as a host material of the lithium element. The negative electrode active material is filled with lithium ions, and lithium ions are desorbed from the negative electrode active material by charging and discharging of the battery. The negative-electrode active material is a substance that causes an electrode reaction, that is, an oxidation reaction and a reduction reaction in the negative electrode. The negative electrode active material may be, for example, lithium metal, an alloy containing lithium metal, a carbon-based substance, a metal oxide, a metal that is alloyed with lithium, an alloy containing the metal, and the like. The carbon-based substance may be, for example, graphene, graphite, hard carbon, and a carbon nanotube. The metal oxide may be, for example, a titanium oxide-based compound or a cobalt oxide-based compound. The above-described metal to be alloyed with lithium may be, for example, silicon, silicon oxide, germanium, tin, lead, aluminum, and gallium, as well as metals obtained by pre-doping these with lithium. In one embodiment, the content of the negative electrode active material in the negative electrode active material layer 34 may be 80% by mass or more and 100% by mass or less with respect to the entire negative electrode active material layer 34.

The secondary battery 1 according to the fourth embodiment may have a metal sheet MS. In one embodiment, the metal sheet MS may be disposed at a position spaced apart from the negative electrode active material layer 34 by a predetermined distance. In this case, an insulating layer may be provided in a region of the end part P on the conductive layer 322, where the region is a region where the metal sheet MS is not disposed. In this case, the short-circuiting between the positive electrode 10 and the negative electrode active material layer 34 by interposing the conductive layer 322 and/or the metal sheet MS at the end part P is suppressed, and the safety of the secondary battery 1 can be improved in a case where the separator 20 has undergone damage the like. The insulating layer provided in the region where the metal sheet MS is not disposed may be formed of, for example, a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. It is noted that in one embodiment, the metal sheet MS may be constituted to cover the entire surface of the end part P of the current collector.

The secondary battery 1 according to the fourth embodiment may be manufactured by preparing a negative electrode laminate sheet having a negative electrode active material layer in the step ST1 of the above-described example of the manufacturing method for the secondary battery 1 according to the first embodiment.

### <Fifth embodiment>

The secondary battery 1 according to the fifth embodiment is different from the secondary battery 1 according to the first embodiment in that a positive electrode laminate is used instead of the negative electrode laminate 30 and a negative electrode is used instead of the positive electrode 10. That is, the secondary battery 1 according to the fifth embodiment has a structure in which 30A and 30B are positive electrode laminates, 10 is a negative electrode, 40 is an electrode tab for the positive electrode, and 42 is an electrode tab for the negative electrode in Figure 1.

In the secondary battery 1 according to the fifth embodiment, the negative electrode may be a current collector formed of the same material as the conductive layer 322 of the negative electrode laminate 30 of the secondary battery 1 according to the first embodiment, may be constituted to be the same as the current collector 32 of the negative electrode laminate 30 of the secondary battery 1 according to the first embodiment, or may have a negative electrode active material layer, similarly to the secondary battery 1 according to the fourth embodiment. The electrode tab for the negative electrode may be constituted to be the same as or similar to the electrode tab 40 for the negative electrode of the secondary battery 1 according to the first embodiment. The metal sheet MS may be present or may not be present on the side of the negative electrode end part included in the negative electrode current collector. The separator may be constituted to be the same as the separator 20 of the secondary battery 1 according to the first embodiment.

In the secondary battery 1 according to the fifth embodiment, a plurality of the positive electrode laminates is alternately laminated in the lamination direction by interposing the intermediate laminate LM. The positive electrode laminate includes a current collector that is configured to sandwich an insulating layer with a pair of conductive layers. The metal sheet MS2 (see the third embodiment) may be present or may not be present on the side of the positive electrode end part included in the positive electrode current collector. The insulating layer in the current collector of the positive electrode laminate may be constituted to be the same as the insulating layer 320 of the negative electrode laminate 30 of the secondary battery 1 according to the first embodiment. The conductive layer in the current collector of the positive electrode laminate may be constituted to be the same as the positive electrode conductive layer 162 of the secondary battery 1 according to the second embodiment. The metal sheet MS2 may be constituted to be the same as the metal sheet MS of the secondary battery 1 according to the first embodiment, except that the metal sheet MS2 is formed of the material indicated as the metal sheet MS2 of the secondary battery 1 according to the third embodiment and is disposed on the positive electrode end part side of the positive electrode laminate. The electrode tab for the positive electrode may be constituted to be the same as the electrode tab 40 for the negative electrode of the secondary battery 1 according to the first embodiment, except that the electrode tab for the positive electrode is formed of the material indicated as the electrode tab 42 for the positive electrode of the secondary battery 1 according to the first embodiment and is disposed on the positive electrode end part side of the positive electrode laminate.

### <Modification example>

The secondary battery 1 can be variously modified without departing from the scope and gist of the present disclosure.

### (Negative electrode laminate or negative electrode)

In one embodiment, a surface of the current collector 32 of the negative electrode laminate 30 or a surface of the negative electrode (in this paragraph, simply referred to as a "negative electrode" and a "negative electrode surface", respectively) may be coated, on at least a part of a surface facing the positive electrode, with a compound (hereinafter, also referred to as a "negative electrode coating agent") containing an aromatic ring in which two or more elements selected from the group consisting of N, S, and O are each independently bonded. The negative electrode coating agent can be retained on the negative electrode by coordinate bonding of the above-described element to the metal atom constituting the negative electrode. According to this aspect, the non-uniform deposition reaction of the lithium metal can be suppressed on the negative electrode surface, and the growth of the lithium metal deposited on the negative electrode in a dendritic shape can be suppressed.

The negative electrode coating agent may be, for example, at least one selected from the group consisting of benzotriazole, benzimidazole, benzimidazolethiol, benzoxazole, benzothiazolethiol, benzothiazole, mercaptobenzothiazole, and derivatives thereof. In one example, the negative electrode coating agent is at least one selected from the group consisting of benzotriazole, benzimidazole, benzoxazole, mercaptobenzothiazole, and derivatives thereof.

### (Buffer functional layer)

In one embodiment, a porous or fibrous buffer functional layer may be provided between the negative electrode laminate 30 or the negative electrode (in this paragraph, simply referred to as the "negative electrode") and the separator. The buffer functional layer has a solid portion (including a gel-like portion) having ion conductivity and electronic conductivity, and a pore portion composed of a gap of the solid portion. In this case, the lithium metal can be deposited on the surface (at the interface between the negative electrode and the buffer functional layer) of the negative electrode and/or inside the buffer functional layer (the surface of the solid portion of the buffer functional layer).

### (Intermediate laminate)

Each of Figure 11 and Figure 12 is a cross-sectional view of a main part for describing another configuration example of the lithium secondary battery. In one embodiment, the positive electrode 10 and the separator 20 disposed on both surfaces of the positive electrode 10 may be constituted as one sheet SH.

In one embodiment, as illustrated in Figure 11, the sheet SH may be alternately folded a plurality of times at an acute angle to constitute an intermediate laminate, and the respective negative electrode laminates 30 (30A and 30B) may be disposed between the separators 20 facing each other in the intermediate laminate.

In one embodiment, as illustrated in Figure 12, the sheet SH may be wound a plurality of times to constitute an intermediate laminate, and the respective negative electrode laminates 30 (30A and 30B) may be disposed between the separators 20 facing each other in the intermediate laminate. It is noted that in the example illustrated in Figure 12, each negative electrode laminate 30 may also be constituted by winding one sheet as described later (see Figure 13).

In the examples illustrated in Figure 11 and Figure 12, even in a case where the positive electrode 10 or the separator 20 is extremely thin, it can be handled as a single sheet SH, and thus the productivity of the battery can be improved. In addition, in the sheet SH, since a physical pressure is applied from both surfaces on the positive electrode 10 sandwiched between the separators 20, wrinkling is unlikely to occur in the positive electrode 10 in a case where the sheets SH are laminated, which makes it possible to improve the cycle characteristics of the battery.

### (Negative electrode laminate)

Each of Figure 13 and Figure 14 is a perspective view for describing another configuration example of the negative electrode laminate. In one embodiment, as illustrated in Figure 13, each negative electrode laminate 30 may be constituted by winding one sheet SH2 a plurality of times. In one embodiment, as illustrated in Figure 14, each negative electrode laminate 30 may be constituted by alternately folding one sheet SH2 at an acute angle a plurality of times. In the examples illustrated in Figure 13 and Figure 14, even in a case where the negative electrode laminate 30 is extremely thin, it can be integrally treated as the sheet SH2, and thus the productivity of the battery can be improved.

### <Addenda>

The embodiment according to the present disclosure includes the following aspects.
[1] A lithium secondary battery including:
   (a) a first laminate comprising a first electrode comprising a first current collector composed of a first insulating layer sandwiched by a pair of first conductive layers, wherein the first current collector has a first end part;
   (b) an intermediate laminate comprising an electrode having a polarity different from a polarity of the first electrode and a separator;
   (c) a second laminate that is disposed to be spaced apart from the first laminate in the lamination direction by interposing the intermediate laminate, wherein the second laminate comprises a second electrode comprising a second current collector composed of a second insulating layer sandwiched by a pair of second conductive layers and having the same polarity as the polarity of the first electrode, and the second current collector has a second end part; and
   (d) an electrode tab that constitutes a joining region with at least the first end part and the second end part and is electrically connected to the first laminate and the second laminate,
   wherein the first insulating layer and the second insulating layer comprises a resin having a glass transition temperature of 60°C or lower.
[2] The lithium secondary battery according to [1], in which the melting point of the resin is 200°C or lower.
[3] The lithium secondary battery according to [1] or [2], in which the resin is polypropylene.
[4] The lithium secondary battery according to any one of [1] to [3], in which the thickness of the first insulating layer and the thickness of the second insulating layer are 6.0 µm or less.
[5] The lithium secondary battery according to any one of [1] to [4], further including:
   (e) a metal sheet that is configured to be disposed between the first end part and the second end part,
   in which the joining region is composed of the electrode tab, the first end part, the metal sheet, and the second end part.
[6] The lithium secondary battery according to [5], in which a thickness of the metal sheet is 3.0 µm or more and 15 µm or less.
[7] The lithium secondary battery according to [5] or [6], in which the metal sheet is formed of the same material as the first conductive layer or the second conductive layer.
[8] The lithium secondary battery according to any one of [1] to [7], in which a plurality of the first laminates and a plurality of the second laminates are configured to be alternately disposed in the lamination direction by sandwiching the intermediate laminate.
[9] The lithium secondary battery according to any one of [5] to [7],
   in which a plurality of the first laminates and a plurality of the second laminates are configured to be alternately disposed in the lamination direction by sandwiching the intermediate laminate, and
   the metal sheet is configured to be disposed at least at one gap between a plurality of the first end parts and a plurality of the second end parts.
[10] The lithium secondary battery according to any one of [1] to [9],
   in which the first laminate is in the form of a plate-shaped sheet, and
   the second laminate is in the form of a plate-shaped sheet which is separate from the first laminate.
[11] The lithium secondary battery according to any one of [1] to [10], in which the first laminate and the second laminate are each configured to be formed by folding or winding a single sheet.
[12] The lithium secondary battery according to any one of [1] to [11], in which a total of 10 or more layers of the first laminates and the second laminates are disposed.
[13] The lithium secondary battery according to any one of [1] to [12], in which the first electrode and the second electrode are negative electrodes.
[14] The lithium secondary battery according to [13], in which the electrode tab is formed of copper that is plated with nickel.

### Examples

The present invention will hereinafter be described in detail by Examples and Comparative Examples. The present invention is not limited by the following examples.

### [Example 1]

A lithium secondary battery having a structure illustrated in Figure 1 was produced. First, a positive electrode 10 having a structure illustrated in Figure 8 was prepared. Polyethylene terephthalate (PET) having a thickness of 6.0 µm was used as the positive electrode insulating layer 160 of the positive electrode current collector 16, and Al having a thickness of 1.0 µm was subjected to vapor deposition as the positive electrode conductive layer 162. The positive electrode active material layer 14 was formed using a positive electrode slurry obtained by mixing 96 parts by mass of LiNi_{0.8}Co_{0.15}Al_{0.05}O₂ as a positive electrode active material, 2 parts by mass of carbon black as a conductive auxiliary agent, and 2 parts by mass of polyvinylidene fluoride (PVDF) as a binder in N-methyl-pyrrolidone (NMP) as a solvent. This positive electrode slurry was applied onto both surfaces of the positive electrode current collector 16 at the weight per unit area of 23 mg/cm². In the manner as described above, twenty positive electrodes 10 were prepared. Next, As the separator 20, a polyethylene microporous sheet (thickness: 15 µm) having a surface coated with a mixture of polyvinylidene fluoride (PVDF) and Al₂O₃ was prepared. Then, both surfaces of the positive electrode 10 were sandwiched and pressed with the separator 20 to obtain an intermediate laminate LM.

As the negative electrode laminate 30, a current collector 32 in which 1.0 µm of Cu as the conductive layer 322 was subjected to vapor deposition on polypropylene (PP) (glass transition temperature: 0°C, melting point: 160°C) as the insulating layer 320, where the polypropylene (PP) had a thickness of 4.5 µm, was used. Twenty-one negative electrode laminates 30 were prepared.

Next, the intermediate laminate LM and the negative electrode laminate 30 were alternately laminated. Then, the respective end parts P of the current collectors 32 were overlapped with each other and joined to the electrode tab 40 for the negative electrode by ultrasonic welding. In this case, the first joining trace WR1 was formed on the negative electrode laminate 30 and the electrode tab 40 for the negative electrode. As the electrode tab 40 for the negative electrode, copper having a thickness of 0.2 mm, which had been subjected to nickel plating, was used. In addition, the positive electrode end parts Q were overlapped with each other and then joined to the electrode tab 42 for the positive electrode by ultrasonic welding. In this case, the first joining trace WR1 was formed on the positive electrode 10 and the electrode tab 42 for the positive electrode. As the electrode tab 42 for the positive electrode, hard aluminum having a thickness of 0.2 mm was used. Such a structural body was inserted into a laminate exterior body and sealed together with an electrolyte solution to obtain a lithium secondary battery. As the electrolyte solution, a 4 M dimethoxyethane (DME) solution of lithium bis(fluorosulfonyl)imide (LiFSI) was used.

### [Example 2]

In the structure illustrated in Figure 1, a lithium secondary battery having a metal sheet MS disposed between the end parts P of the negative electrode laminate 30 was also produced. First, twenty intermediate laminates LM were obtained in the same manner as in Example 1.

As the negative electrode laminate 30, a current collector 32 in which 1.0 µm of Cu as the conductive layer 322 was subjected to vapor deposition on polypropylene (PP) as the insulating layer 320, where the polypropylene (PP) had a thickness of 4.5 µm, was used. A metal sheet MS (electrolytic copper foil of 4.0 µm) was attached to the end part P of each negative electrode laminate 30 by ultrasonic welding as illustrated in Figure 3. In this case, the preliminary joining trace WP was formed on the negative electrode laminate 30 and the metal sheet MS. Twenty-one negative electrode laminates 30 in which the metal sheet MS was preliminarily joined were prepared.

Next, the intermediate laminate LM and the negative electrode laminate 30 were alternately laminated. Then, the respective end parts P of the current collectors 32 were overlapped with each other and joined to the electrode tab 40 for the negative electrode by ultrasonic welding. In this case, the first joining trace WR1 for joining the negative electrode laminate 30, the electrode tab 40 for the negative electrode, and the metal sheet MS was formed, and the second joining trace WR2 for joining the electrode tab 40 for the negative electrode and the metal sheet MS was formed. As the electrode tab 40 for the negative electrode, copper having a thickness of 0.2 mm, which had been subjected to nickel plating, was used. In addition, the positive electrode end parts Q were overlapped with each other and then joined to the electrode tab 42 for the positive electrode by ultrasonic welding. In this case, the first joining trace WR1 was formed on the positive electrode 10 and the electrode tab 42 for the positive electrode. As the electrode tab 42 for the positive electrode, hard aluminum having a thickness of 0.2 mm was used. Such a structural body was inserted into a laminate exterior body and sealed together with an electrolyte solution to obtain a lithium secondary battery. As the electrolyte solution, a 4 M dimethoxyethane (DME) solution of lithium bis(fluorosulfonyl)imide (LiFSI) was used.

### [Examples 3 to 6]

A lithium secondary battery was produced in the same manner as in Example 1 or 2, except that the presence or absence or the kind of the metal sheet MS to be attached to the end part P of each negative electrode laminate 30 and the kind of the electrode tab 40 for the negative electrode were changed as shown in Table 1.

### [Comparative Examples 1 and 2]

A lithium secondary battery was produced in the same manner as in Example 1, except that polyethylene terephthalate (PET) (glass transition temperature: 69°C, melting point: 260°C) having a thickness of 4.5 µm or 6.0 µm was used as the insulating layer 320 of the negative electrode laminate 30.

### [Measurement of resistance value]

For each example, a resistance (hereinafter, referred to as a "resistance") between the electrode tab 40 for the negative electrode and the negative electrode laminate 30 was measured. Specifically, each of the lithium secondary batteries according to Examples and Comparative Examples was disassembled and subjected to measurement by a four-terminal method. The positive electrode of the clip-type lead of a resistance meter BT3561 manufactured by HIOKI E.E. CORPORATION was connected to the electrode tab 40 for the negative electrode, and the negative electrode was connected to one of the twenty-one negative electrode laminates 30, and the impedance at 1 kHz was measured with a 4-terminal lead. Next, the measurement was carried out by connecting the negative electrode to another negative electrode laminate, and the average value from the twenty-one negative electrode laminates was determined. The results are shown in Table 1.

It is noted that as a result of subjecting the lithium secondary battery of each of Examples to a nail penetration test, ignition or explosion did not occur in any case. Here, the nail penetration test is a test for checking the presence or absence of ignition or explosion of a battery in a case where a nail is pierced through each battery to cause an internal short circuit in a pseudo manner.

**[Table 1]**

| Example | Insulating layer of negative electrode laminate | Metal sheet | Number of metal sheets | Kind of metal sheet | Electrode tab for negative electrode | Resistance / mΩ |
|---|---|---|---|---|---|---|
| Example 1 | PP 4.5 µm | - | - | - | Cu plated with Ni | 2.0 |
| Example 2 | PP 4.5 µm | Cu 4 µm | 21 sheets | Electrolytic copper foil | Cu plated with Ni | 0.75 |
| Example 3 | PP 4.5 µm | Cu 6 µm | 21 sheets | Wound copper foil | Cu plated with Ni | 0.68 |
| Example 4 | PP 4.5 µm | Cu 8 µm | 21 sheets | Wound copper foil | Cu plated with Ni | 0.55 |
| Example 5 | PP 4.5 µm | - | - | - | Ni | 2.2 |
| Example 6 | PP 4.5 µm | Cu 4 µm | 21 sheets | Wound copper foil | Ni | 1.1 |
| Comparative Example 1 | PET 4.5 µm | - | - | - | Cu plated with Ni | 4.9 |
| Comparative Example 2 | PET 6.0 µm | - | - | - | Cu plated with Ni | 19.4 |

The meanings of the abbreviations and symbols in Table 1 are as follows.
PP: polypropylene
PET: polyethylene terephthalate
-: It means that the metal sheet is not included.

### Reference Signs List

1: secondary battery
10: positive electrode
12, 16: positive electrode current collector
14: positive electrode active material layer
20: separator
30, 30A, 30B: negative electrode laminate
32, 32A, 32B: current collector
34: negative electrode active material layer
40: electrode tab for the negative electrode
42: electrode tab for the positive electrode
160: positive electrode insulating layer
162: positive electrode conductive layer
320, 320A, 320B: insulating layer
322, 322A, 322B: conductive layer
LM: intermediate laminate
MS, MS2: metal sheet
P, P1, P2: end part
Q: positive electrode end part
WP: preliminary joining trace
WR1: first joining trace
WR2: second joining trace

## Claims

1. A lithium secondary battery comprising:
(a) a first laminate comprising a first electrode comprising a first current collector composed of a first insulating layer sandwiched by a pair of first conductive layers, wherein the first current collector has a first end part;
(b) an intermediate laminate comprising an electrode having a polarity different from a polarity of the first electrode and a separator;
(c) a second laminate that is configured to be disposed to be spaced apart from the first laminate in the lamination direction by interposing the intermediate laminate, wherein the second laminate comprises a second electrode comprising a second current collector composed of a second insulating layer sandwiched by a pair of second conductive layers and having the same polarity as the polarity of the first electrode, and the second current collector has a second end part; and
(d) an electrode tab that is configured to constitute a joining region with at least the first end part and the second end part and is electrically connected to the first laminate and the second laminate,
wherein the first insulating layer and the second insulating layer comprises a resin having a glass transition temperature of 60°C or lower.

2. The lithium secondary battery according to Claim 1, wherein the melting point of the resin is 200°C or lower.

3. The lithium secondary battery according to Claim 1, wherein the resin is polypropylene.

4. The lithium secondary battery according to Claim 1, wherein the thickness of the first insulating layer and the thickness of the second insulating layer are 6.0 µm or less.

5. The lithium secondary battery according to Claim 1, further comprising:
(e) a metal sheet that is configured to be disposed between the first end part and the second end part,
wherein the joining region is composed of the electrode tab, the first end part, the metal sheet, and the second end part.

6. The lithium secondary battery according to Claim 5, wherein the thickness of the metal sheet is 3.0 µm or more and 15 µm or less.

7. The lithium secondary battery according to Claim 5, wherein the metal sheet is made of the same material as the first conductive layer or the second conductive layer.

8. The lithium secondary battery according to Claim 1, wherein a plurality of the first laminates and a plurality of the second laminates are configured to be alternately disposed in the lamination direction by sandwiching the intermediate laminate.

9. The lithium secondary battery according to Claim 5,
wherein a plurality of the first laminates and a plurality of the second laminates are configured to be alternately disposed in the lamination direction by sandwiching the intermediate laminate, and
the metal sheet is configured to be disposed at least at one gap between a plurality of the first end parts and a plurality of the second end parts.

10. The lithium secondary battery according to Claim 1,
wherein the first laminate is in the form of a plate-shaped sheet, and
the second laminate is in the form of a plate-shaped sheet which is separate from the first laminate.

11. The lithium secondary battery according to Claim 1, wherein the first laminate and the second laminate are each configured to be formed by folding or winding a single sheet.

12. The lithium secondary battery according to Claim 1, wherein a total of 10 or more layers of the first laminates and the second laminates are disposed.

13. The lithium secondary battery according to any one of Claims 1 to 12, wherein the first electrode and the second electrode are negative electrodes.

14. The lithium secondary battery according to Claim 13, wherein the electrode tab is made of copper that is plated with nickel.
